# EUROPEAN PATENT APPLICATION

(11) **EP 2 418 868 A2**
(43) Date of publication of application: **15.02.2012**
(21) Application number: 11176586.3
(22) Date of filing: 04.08.2011
(51) Int. Cl.: H04N 13/04

(54) **Image processor, stereoscopic display, method of detecting parallax displacement in a stereoscopic display**

(30) Priority: 11.08.2010 JP 2010180232; 22.11.2010 JP 2010260075
(71) Applicant: Sony Corporation, Tokyo 108-0075 (JP)
(72) Inventor: Matsunaga, Masahiro, Minato-ku, Tokyo 108-0075 (JP); Sato, Yoshihisa, Minato-ku, Tokyo 108-0075 (JP)
(74) Representative: Mills, Julia

(57) **Abstract**

A favorable stereoscopic image with less parallax displacement is allowed to be displayed. An image processor includes: a storage section storing parallax displacement data concerned with parallax displacement caused in a stereoscopic display; and a parallax displacement correction section correcting a stereoscopic image to be displayed on the stereoscopic display based on the parallax displacement data, in which the stereoscopic display includes a display section including a plurality of pixels two-dimensionally arranged to display a parallax composite image created from a plurality of parallax images, and a parallax separation structure separating the parallax composite image into the plurality of parallax images.

## Description

The present technology relates to an image processor, a stereoscopic display and a stereoscopic display system for displaying a stereoscopic image by, for example, a parallax barrier system, and a method of detecting parallax displacement in a stereoscopic display and a method of manufacturing a stereoscopic display.

Techniques of performing stereoscopic display may be classified into a technique of achieving stereoscopic vision by using glasses and a technique of achieving stereoscopic vision by naked eyes without wearing glasses. A display method by the latter technique is called autostereoscopic display method. Typical autostereoscopic display methods include a parallax barrier system and a lenticular system. In the parallax barrier system or the lenticular system, parallax images for stereoscopic vision (a right-eye image and a left-eye image in the case of two viewpoints) which are spatially separated from one another are displayed on a two-dimensional display panel, and the parallax images are separated by parallax in a horizontal direction by a parallax separation structure to achieve stereoscopic vision. In the parallax barrier system, as the parallax separation structure, a parallax barrier having slit-like openings is used. In the lenticular system, as the parallax separation structure, a lenticular lens including a plurality of cylindrical split lenses arranged in parallel is used.

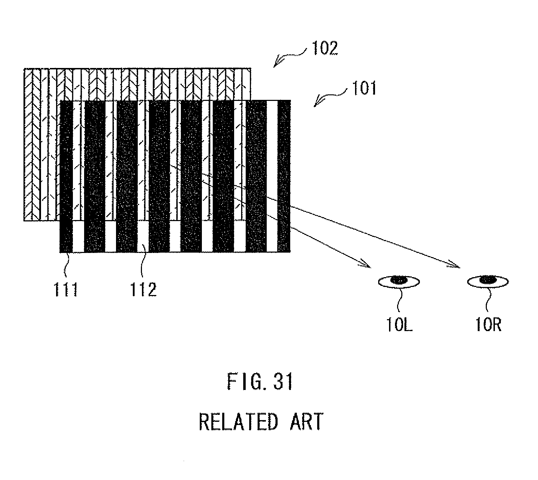

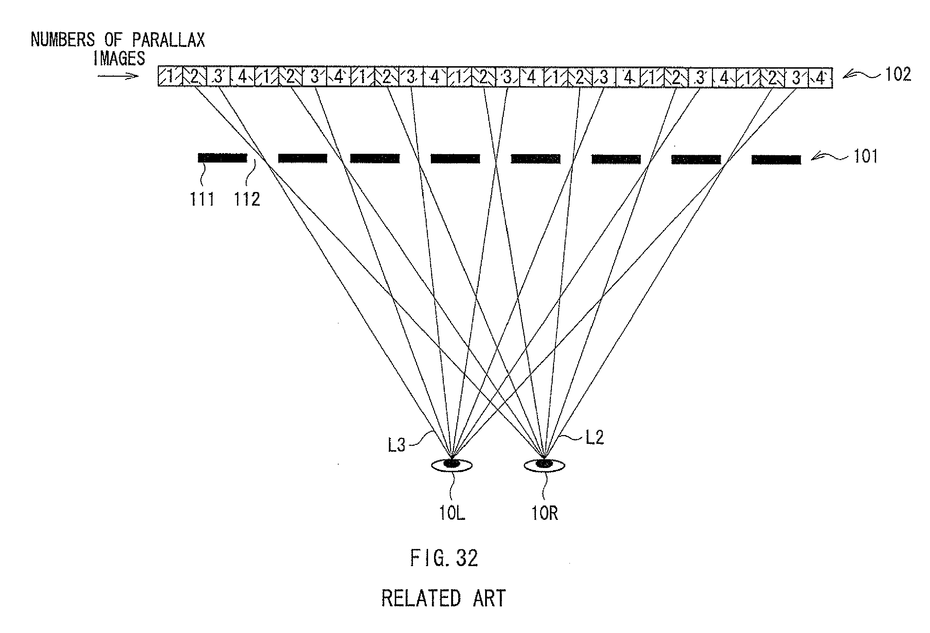

FIGS. 31 and 32 illustrate a typical configuration example of a parallax barrier system stereoscopic display. In the stereoscopic display, a parallax barrier 101 is arranged to face a front surface of a two-dimensional display panel 102. In a typical configuration of the parallax barrier 101, shielding sections 111 allowing display image light from the two-dimensional display panel 102 to be blocked and stripe-shaped opening sections (slit sections) 112 allowing the display image light to pass therethrough are alternately arranged in a horizontal direction.

Images based on three-dimensional image data are displayed on the two-dimensional display panel 102. For example, a plurality of parallax images with different parallax information are prepared as three-dimensional image data, and each of the parallax images are separated into a plurality of stripe-shaped separated images extending in a vertical direction. Then, the separated images of the plurality of parallax images are alternately arranged in a horizontal direction to create a composite image including a plurality of stripe-shaped parallax images in one screen, and the composite image is displayed on the two-dimensional display panel 102. In the case of the parallax barrier system, the composite image displayed on the two-dimensional display panel 102 is viewed through the parallax barrier 101. When the widths of the separated images to be displayed, a slit width in the parallax barrier 101 and the like are appropriately set, in the case where a viewer sees the stereoscopic display from a predetermined position and a predetermined direction, light rays from different parallax images are allowed to enter into left and right eyes 10L and 10R of the viewer, respectively, through the slit sections 112. Thus, when the viewer sees the stereoscopic display from a predetermined position and a predetermined direction, a stereoscopic image is perceived. To achieve stereoscopic vision, it is necessary for the left and right eyes 10L and 10R to view different parallax images, respectively; therefore, two or more parallax images, that is, a left-eye image and a right-eye image are necessary. In the case where three or more parallax images are used, multi-view vision is achievable. When more parallax images are used, stereoscopic vision in response to changes in viewpoint of the viewer is achievable. In other words, motion parallax is obtained.

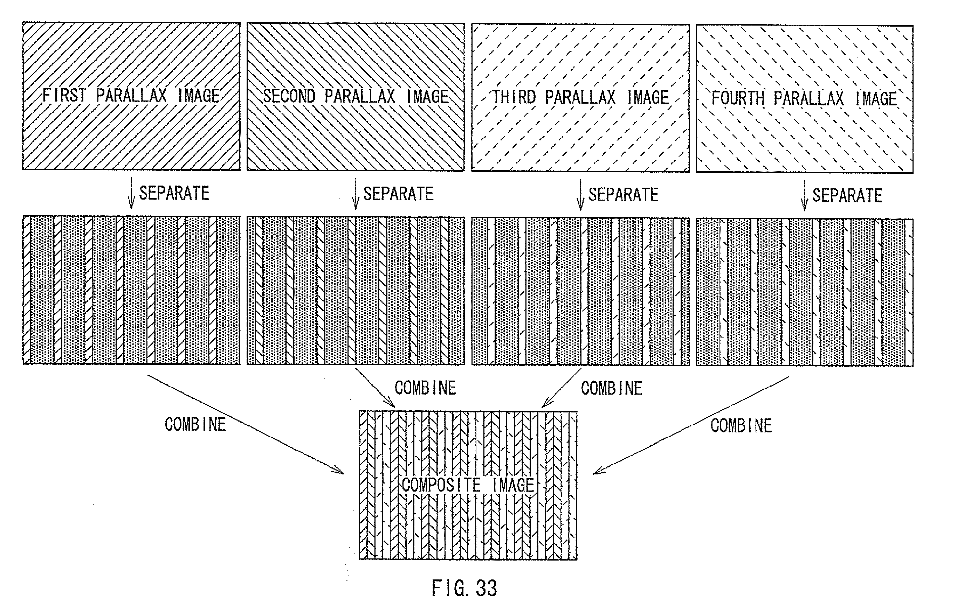

FIG. 33 schematically illustrates processes until creating a composite image from a plurality of parallax images. FIG. 33 illustrates an example using four parallax images, that is, first to fourth parallax images. The first to fourth parallax images illustrated in an upper section in FIG. 33 are separated into stripe-shaped separated images illustrated in a middle section in FIG. 33. These separated images of the first to fourth parallax images are alternately arranged in a horizontal direction to create a composite image illustrated in a lower section in FIG. 33. As a result, the composite image is a composite image in which stripe-shaped separated images separated from the first to fourth parallax images are alternately arranged in a horizontal direction in cyclic order of the first, second, third and fourth parallax images.

FIG. 32 illustrates a state where multi-view stereoscopic display is achieved by displaying the composite image illustrated in FIG. 33 on the two-dimensional display panel 102. In the case where the composite image displayed on the two-dimensional display panel 102 is viewed through the parallax barrier 101, when the composite image is viewed from a specific viewpoint, the left eye 10L and the right eye 10R are allowed to view only specific parallax images, thereby perceiving a stereoscopic image. In FIG. 32, the left eye 10L and the right eye 10R see only light L3 from the third parallax image and light L2 from the second parallax image, respectively, to perceive a stereoscopic image based on the third parallax image and the second parallax image.

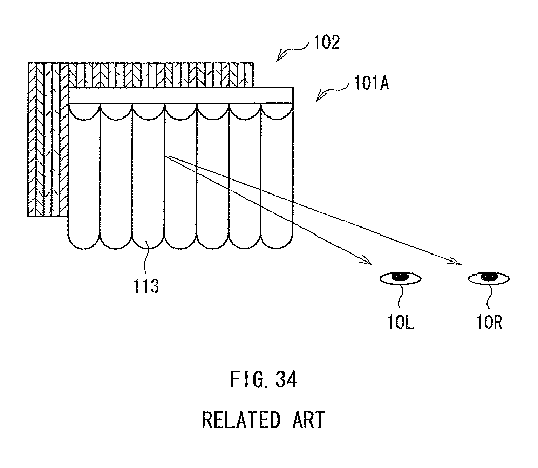

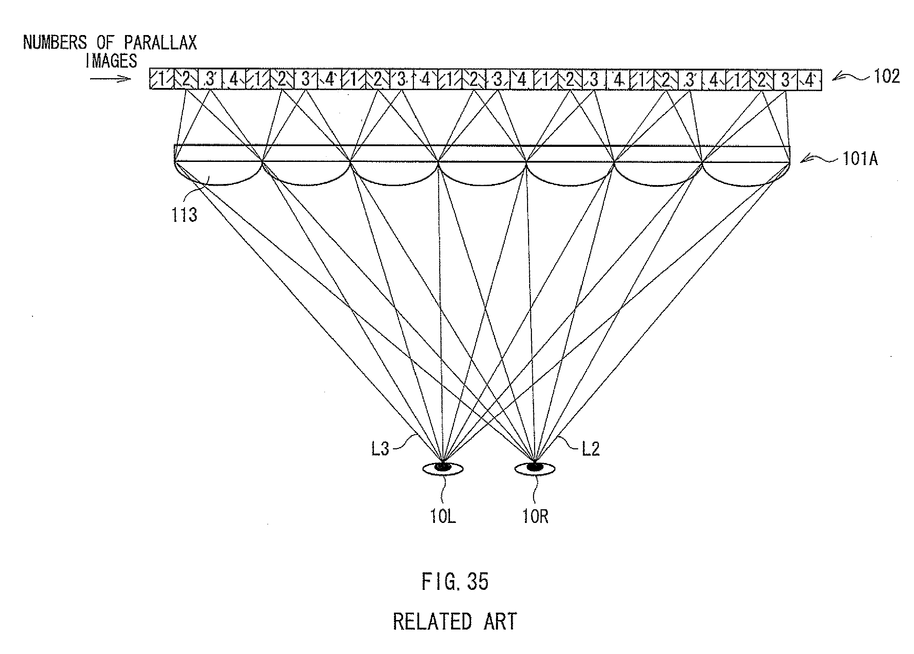

FIGs. 34 and 35 illustrate a typical configuration example of a lenticular system stereoscopic display. Unlike the parallax barrier system stereoscopic display illustrated in FIGS. 31 and 32, in the stereoscopic display, a lenticular lens 101A instead of the parallax barrier 101 is arranged as a parallax separation structure to face a display surface of the two-dimensional display panel 102.

In the lenticular lens 101A, for example, a large number of cylindrical lenses (split lenses) 113 extending in a vertical direction and having refractive power only in a horizontal direction are arranged in parallel in the horizontal direction. A lens pitch of the cylindrical lens 113 is appropriately set according to the number of parallaxes to be displayed. For example, in the case of multi-view vision with four parallaxes, four separated images with different parallaxes are set to correspond to one cylindrical lens 113. Therefore, display image light from the two-dimensional display panel 102 is polarized and emitted in different directions corresponding to parallax images.

FIG. 35 illustrates a state where multi-vision stereoscopic display is achieved in the stereoscopic display by displaying the composite image illustrated in FIG. 33 on the two-dimensional display panel 102. In the case where the composite image displayed on the two-dimensional display panel 102 is viewed through the lenticular lens 101A, when the composite image is viewed from a specific viewpoint, the left eye 10L and the right eye 10R are allowed to see only specific parallax images, respectively, thereby perceiving a stereoscopic image. In FIG. 35, the left eye 10L and the right eye 10R see only light L3 from the third parallax image and light L2 from the second parallax image, respectively, to perceive a stereoscopic image based on the third parallax image and the second parallax image.

In the above-described parallax barrier system or lenticular system stereoscopic display or the like, stereoscopic vision is achieved by entering light rays from different parallax images to the right eye and the left eye of a viewer, respectively. Therefore, to achieve favorable stereoscopic vision, it is necessary to accurately adjust relative positions of respective pixels of a display panel and respective slit sections or the like of a parallax barrier to design values, and when the positions are displaced due to a factor of some kind, the quality of stereoscopic vision is deteriorated.

In Japanese Unexamined Patent Application Publication No. 2004-179806, in a stereoscopic display configured of a combination of a CRT (cathode ray tube) and a parallax barrier, a scanning position or the like of the CRT is adjusted to correct displacement of the parallax barrier. In a technique described in Japanese Unexamined Patent Application Publication No. 2004-179806, when the starting position of the scanning position of the CRT or the width of a scanning line is adjusted to correct displacement of the parallax barrier. However, it is difficult for the technique to respond to the case where displacement on a pixel scale occurs.

It is desirable to provide an image processor, a stereoscopic display and a stereoscopic display system which are capable of displaying a favorable stereoscopic image with less parallax displacement, and a method of detecting parallax displacement in a stereoscopic display and a method of manufacturing a stereoscopic display.
Various respective aspects and features of the invention are defined in the appended claims. Combinations of features from the dependent claims may be combined with features of the independent claims as appropriate and not merely as explicitly set out in the claims.

According to an embodiment of the technology, there is provided an image processor including: a storage section storing parallax displacement data concerned with parallax displacement caused in a stereoscopic display; and a parallax displacement correction section correcting a stereoscopic image to be displayed on the stereoscopic display based on the parallax displacement data. In this case, the stereoscopic display includes a display section including a plurality of pixels two-dimensionally arranged to display a parallax composite image created from a plurality of parallax images, and a parallax separation structure separating the parallax composite image into the plurality of parallax images.

According to an embodiment of the technology, there is provided a stereoscopic display including: a display section including a plurality of pixels two-dimensionally arranged to display a parallax composite image created from a plurality of parallax images; parallax separation components each provided correspondingly to the plurality of pixels, to separate the parallax composite image into the plurality of parallax images; and a parallax displacement correction section correcting the parallax composite image, based on parallax displacement data.

According to an embodiment of the technology, there is provided a stereoscopic display system including: a stereoscopic display; a parallax displacement analysis section detecting parallax displacement caused in the stereoscopic display, to produce parallax displacement data concerned with the parallax displacement; a storage section storing the parallax displacement data; and a parallax displacement correction section correcting a stereoscopic image to be displayed on the stereoscopic display, based on the parallax displacement data. In this case, the stereoscopic display includes a display section including a plurality of pixels two-dimensionally arranged to display a parallax composite image created from a plurality of parallax images, and a parallax separation structure separating the parallax composite image into the plurality of parallax images.

In the image processor, the stereoscopic display or the stereoscopic display system according to the embodiment of the technology, the parallax composite image is corrected by the parallax displacement correction section based on parallax displacement data concerned with parallax displacement.

For example, in the case where parallax displacement causing a different parallax image other than the specific parallax image to be viewed from the specific viewpoint occurs, the parallax displacement correction section displaces pixel addresses which are to be assigned to each of the parallax images for display, thereby to reduce the proportion of the different parallax image viewed from the specific viewpoint.

More specifically, for example, when a magnitude of the parallax displacement corresponds to an integral multiple number of pixels, the parallax displacement correction section displaces pixel addresses which are to be assigned to each of the different parallax image and the specific parallax image according to the magnitude of the parallax displacement, and when the magnitude of the parallax displacement is within one pixel, correction is performed to combine a pixel value of the different parallax image and the a pixel value of the specific parallax image according to the magnitude of the parallax displacement.

According to an embodiment of the technology, there is provided a method of detecting parallax displacement in a stereoscopic display, the stereoscopic display including a display section and a parallax separation structure, the display section including a plurality of pixels, as sub-pixels, which are two-dimensionally arranged to display a parallax composite image created from a plurality of parallax images, the parallax separation structure separating the parallax composite image into the plurality of parallax images, the method including: taking an image of the stereoscopic display from a specific viewpoint while allowing both of sub-pixels corresponding to the specific viewpoint and other sub-pixels corresponding to another viewpoint to emit light to form a specific measurement pattern image; and detecting the parallax displacement through analyzing the taken specific measurement pattern image.

According to an embodiment of the technology, there is provided a method of manufacturing a stereoscopic display, the stereoscopic display including a display section, a parallax separation structure, a storage section and a parallax displacement correction section, the display section including a plurality of pixels, as sub-pixels, which are two-dimensionally arranged to display a parallax composite image created from a plurality of parallax images, the parallax separation structure separating the parallax composite image into the plurality of parallax images, the storage section storing parallax displacement data concerned with parallax displacement, the parallax displacement correction section correcting the parallax composite image based on the parallax displacement data, the method including: taking an image of the stereoscopic display from a specific viewpoint while allowing both of sub-pixels corresponding to the specific viewpoint and other sub-pixels corresponding to another viewpoint to emit light to form a specific measurement pattern image; detecting the parallax displacement through analyzing the taken specific measurement pattern image; and storing parallax displacement data concerned with the detected parallax displacement in the storage section.

In the image processor, the stereoscopic display or the stereoscopic display system according to the embodiment of the technology, the parallax composite image is corrected based on parallax displacement data; therefore, a favorable stereoscopic image with less parallax displacement is allowed to be displayed on an entire screen.

In the method of detecting parallax displacement in a stereoscopic display or the method of manufacturing a stereoscopic display according to the embodiment of the technology, an image of the stereoscopic display is taken from the specific viewpoint while allowing both of sub-pixels corresponding to the specific viewpoint and other sub-pixels corresponding to another viewpoint to emit light to form the specific measurement pattern image, and the taken specific measurement pattern image is analyzed to detect parallax displacement; therefore, parallax displacement data concerned with parallax displacement is allowed to be determined from one sub-pixel to another. A favorable stereoscopic image with less parallax displacement is allowed to be displayed on an entire screen based on the data.

It is to be understood that both the foregoing general description and the following detailed description are exemplary, and are intended to provide further explanation of the technology as claimed.

The accompanying drawings are included to provide a further understanding of the disclosure, and are incorporated in and constitute a part of this specification. The drawings illustrate embodiments and, together with the specification, serve to explain the principles of the technology.
Embodiments of the invention will now be described with reference to the accompanying drawings, throughout which like parts are referred to by like references, and in which:

FIG. 1 is a block diagram illustrating a configuration example of a stereoscopic display system according to a first embodiment of the technology.

FIG. 2 is a plan view illustrating an example of a pixel arrangement of a display panel.

FIG. 3 is an illustration of taking an image by a camera during parallax displacement detection in the stereoscopic display system illustrated in FIG. 1.

FIGs. 4A and 4B are a flow chart illustrating a parallax displacement detection process in the stereoscopic display system illustrated in FIG. 1 and a flow chart illustrating a stereoscopic image display process with use of parallax displacement data in the stereoscopic display system illustrated in FIG. 1, respectively.

FIG. 5 is a brief illustration of a parallax displacement detection process.

FIG. 6 is an illustration of an example of a measurement pattern image for parallax displacement measurement.

FIG. 7 is a plan view illustrating an example of a barrier pattern of a parallax barrier.

FIG. 8 is a schematic illustration of a combination of the measurement pattern image illustrated in FIG. 6 and the parallax barrier illustrated in FIG. 7.

FIG. 9 is a schematic illustration of an example of a state where the measurement pattern image illustrated in FIG. 6 is viewed through the parallax barrier illustrated in FIG. 7.

FIG. 10 is an illustration of an example of a barrier pattern in the case where a parallax barrier is displaced.

FIG. 11 is a schematic illustration of a combination of the measurement pattern image illustrated in FIG. 6 and the parallax barrier illustrated in FIG. 10.

FIG. 12 is a schematic illustration of an example of a state where the measurement pattern image illustrated in FIG. 6 is viewed through the parallax barrier illustrated in FIG. 10.

FIG. 13 is an illustration of data reduction.

FIG. 14 is a plan view illustrating an example of a barrier pattern of a parallax barrier in the case where the number of viewpoints is 5.

FIG. 15 is a schematic sectional view illustrating an example of a state where the measurement pattern image illustrated in FIG. 6 is viewed from a second viewpoint through the parallax barrier in FIG. 14 in the case where stereoscopic display with 5 viewpoints is performed.

FIG. 16 is a schematic plan view illustrating an example of a state where the measurement pattern image illustrated in FIG. 6 is viewed from the second viewpoint through the parallax barrier in FIG. 14 in the case where stereoscopic display with 5 viewpoints is performed.

FIG. 17 is an illustration of an example of a suitable measurement pattern image in the case where the number of viewpoints is 5.

FIG. 18 is a schematic illustration of an example of a state where the measurement pattern image illustrated in FIG. 17 is viewed from a third viewpoint through the parallax barrier in FIG. 14.

FIG. 19 is an illustration of a correspondence relationship between respective sub-pixels and respective viewpoints in the case where the number of viewpoints is 5.

FIG. 20 is an illustration of an example of a luminance distribution observed from a second viewpoint in the case where measurement pattern images corresponding to respective viewpoints are displayed in a time-divisional manner in a state where parallax displacement is small.

FIG. 21 is an illustration of an example of a luminance distribution observed from the second viewpoint in the case where measurement pattern images corresponding to respective viewpoints are displayed in a time-divisional manner in a state where parallax displacement is large.

FIG. 22 is an illustration of correction of a parallax composite image.

FIGs. 23A and 23B are an illustration in a state where no parallax displacement occurs and an illustration in a state where parallax displacement occurs, respectively.

FIG. 24 is an illustration of an example of a method of determining a magnitude of parallax displacement.

FIG. 25 is an illustration of a relationship between sub-pixels and slit sections in a state where no parallax displacement occurs.

FIG. 26A is a schematic illustration of a state where parallax displacement by 1 sub-pixel from the state in FIG. 25 occurs; FIG. 26B is an illustration of an example of an image correction technique responding to the parallax displacement in FIG. 26A; and FIG. 26C is an illustration of a state after image correction on the parallax displacement in FIG. 26A.

FIG. 27A is a schematic illustration of a state where parallax displacement by not an integral multiple number of sub-pixels from the state in FIG. 25 occurs; FIG. 27B is an illustration of an example of an image correction technique responding to the parallax displacement in FIG. 27A; and FIG. 27C is an illustration of a state after image correction on the parallax displacement in FIG. 27A.

FIG. 28 is a block diagram illustrating a configuration example of a stereoscopic display system according to a fourth embodiment of the technology.

FIG. 29 is an illustration of a first modification of a barrier pattern of a parallax barrier.

FIG. 30 is an illustration of a second modification of a barrier pattern of a parallax barrier.

FIG. 31 is an illustration of a concept of typical parallax barrier system stereoscopic display.

FIG. 32 is an illustration of a concept of typical parallax barrier system stereoscopic display.

FIG. 33 is an illustration of composition of parallax images.

FIG. 34 is an illustration of a concept of typical lenticular system stereoscopic display.

FIG. 35 is an illustration of a concept of typical lenticular system stereoscopic display.

Preferred embodiments of the technology will be described in detail below referring to the accompanying drawings.

### (First Embodiment)

### [Configuration of stereoscopic display system]

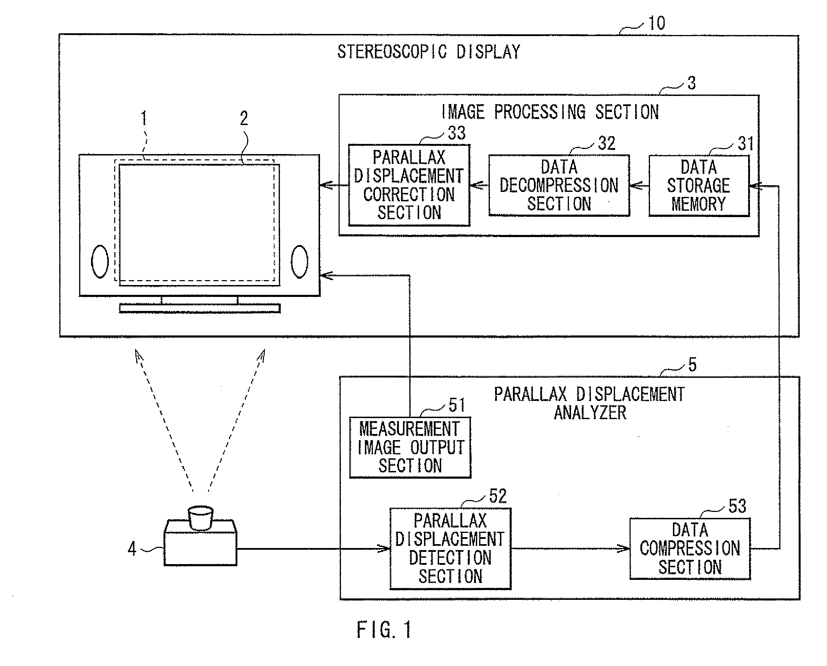

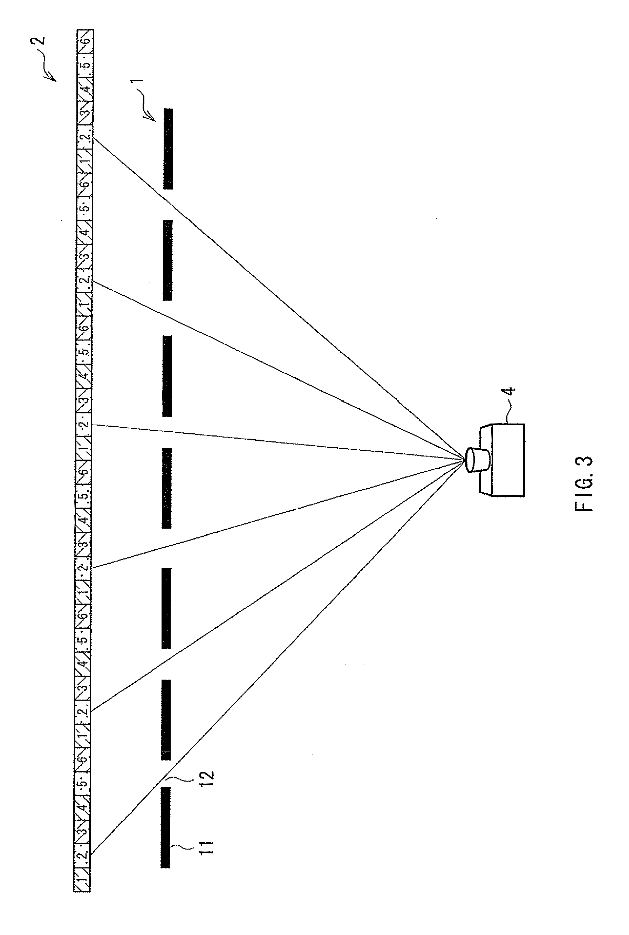

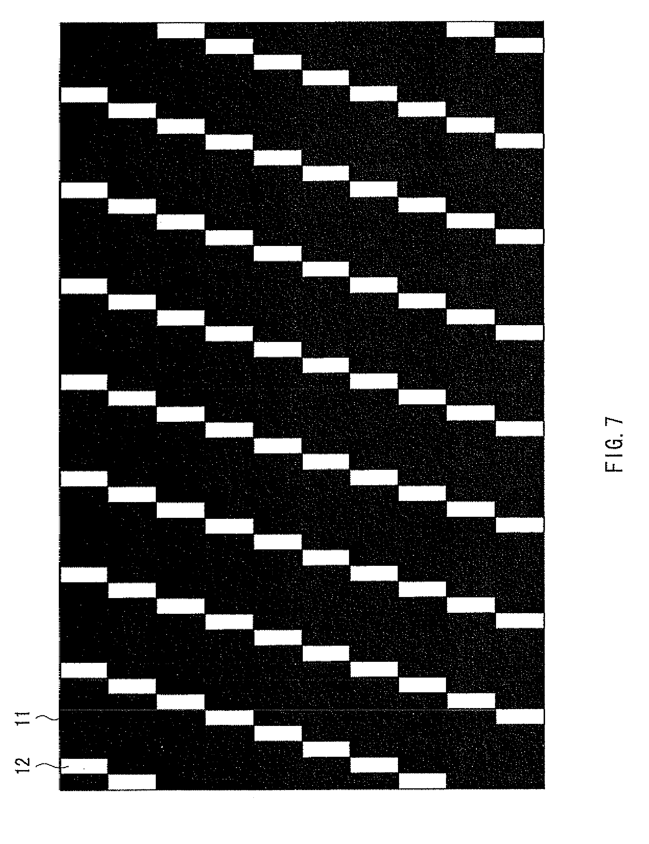

FIG. 1 illustrates a configuration example of a stereoscopic display system according to a first embodiment of the technology. The stereoscopic display system includes a camera 4, a parallax displacement analyzer 5 and a stereoscopic display 10. The parallax displacement analyzer 5 includes a measurement image output section 51, a parallax displacement detection section 52 and a data compression section 53. The stereoscopic display 10 includes a parallax barrier 1 and a display panel 2, and an image processing section 3. The image processing section 3 includes a data storage memory 31, a data decompression section 32 and a parallax displacement correction section 33. For example, as illustrated in FIGs. 3 and 7, the parallax barrier 1 includes shielding sections 11 and slit sections 12.

The parallax barrier 1 corresponds to a specific example of "a parallax separation structure" in the technology. The display panel 2 corresponds to a specific example of "a display section" in the technology. The data storage memory 31 corresponds to a specific example of "a storage section" in the technology. The parallax displacement correction section 33 corresponds to a specific example of "a parallax displacement correction section" in the technology. The camera 4 and the parallax displacement analyzer 5 correspond to specific examples of "a parallax displacement analysis section" in the technology. The camera 4 corresponds to a specific example of "a shooting section" in the technology.

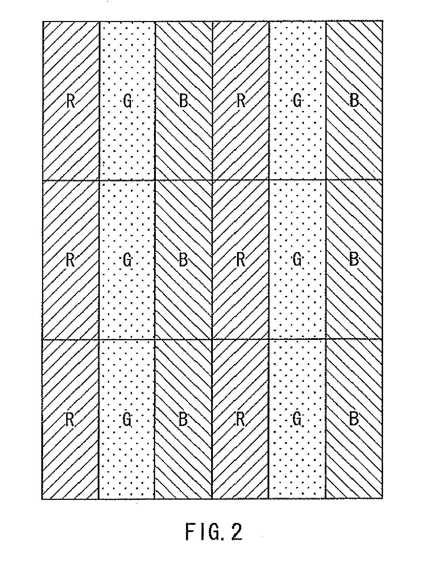

The display panel 2 is configured of a two-dimensional display such as a liquid crystal display panel, an electroluminescence display panel or a plasma display. A plurality of pixels are two-dimensionally arranged in a display screen of the display panel 2. For example, as illustrated in FIG. 2, sub-pixels of a plurality of colors as the plurality of pixels are arranged cyclically and two-dimensionally in the display screen of the display panel 2. FIG. 2 illustrates an example in which sub-pixels of R (red), sub-pixels of G (green) and sub-pixels of B (blue) are alternately arranged in a horizontal direction, and sub-pixels of a same color are arranged in a vertical direction. The display panel 2 displays a parallax composite image created from a plurality of parallax images.

The parallax barrier 1 separates the parallax composite image displayed on the display panel 2 into a plurality of parallax images to achieve stereoscopic vision, and faces the display panel 2 in a predetermined positional relationship to achieve stereoscopic vision. For example, as illustrated in FIGs. 3 and 7, the parallax barrier 1 includes the shielding sections 11 allowing light to be blocked and the slit sections 12 as parallax separation structures allowing light to pass therethrough and corresponding to pixels of the display panel 2 to achieve stereoscopic vision. The parallax barrier 1 is formed by arranging, as the shielding sections 11, a black material not allowing light to pass therethrough or a thin film of a metal reflecting light on, for example, a transparent flat plate.

The parallax barrier 1 ideally separates the parallax composite image into a plurality of parallax images on the screen of the display panel 2 to allow only a specific parallax image to be viewed when seeing the display panel 2 from a specific viewpoint. Emission angles of light from respective pixels of the display panel 2 are limited by a positional relationship between the slit sections 12 of the parallax barrier 1 and respective pixels of the display panel 2. The respective pixels in the display panel 2 have different display directions depending on the positional relationship with the slit sections 12. A viewer views different images with his right and left eyes, respectively, thereby being allowed to perceive a stereoscopic image. As the respective pixels have different display directions, parallax images corresponding to display angles are displayed on the display panel 2 to achieve stereoscopic vision.

It is to be noted that a basic principle of stereoscopic display (stereoscopic vision) in the stereoscopic display 10 is the same as that of a typical parallax barrier system stereoscopic display in related art (refer to FIGs. 31 and 32). A parallax barrier 101 in FIG 31 is an example in which slit sections 112 extending in a vertical direction are arranged, and FIG. 7 illustrates an example in which the slit sections 12 are arranged in an oblique direction in a step-like pattern; however, the parallax barrier 1 is different from the parallax barrier 101 only in the arrangement pattern (barrier pattern) of the slit sections 12, and has the same function of performing parallax separation as that of the parallax barrier 101 irrespective of a difference in barrier pattern. The parallax composite image to be displayed on the display panel 2 is created from a plurality of parallax images in a pattern corresponding to the barrier pattern. A composite image illustrated in FIG. 33 is an example corresponding to a barrier pattern extending in a vertical direction. In the case of a step-like barrier pattern as illustrated in FIG. 7, a plurality of parallax images are separated and arranged in an oblique direction in a step-like pattern corresponding to the barrier pattern to create a composite image.

In this case, a relative positional relationship between the parallax images displayed on the screen of the display panel 2, the slit sections 12 of the parallax barrier 1 and the like, and both eyes is important to achieve favorable stereoscopic vision. In particular, horizontal displacement is critical, because horizontal displacement greatly affects the parallax images achieving stereoscopic vision. However, in an actual stereoscopic display 10, the screen of the display panel 2 may locally expand or shrink in a plane, or may be distorted (deformed) in a direction perpendicular to the plane. Further, likewise, the parallax barrier 1 may locally expand or shrink in a plane, or may be distorted (deformed) in a direction perpendicular to the plane. Moreover, a distance from the screen of the display panel 2 to the parallax barrier 1 may not be adjusted accurately to a design position. Further, when stereoscopic displays are actually manufactured, various variations occur.

In such a case, a relative positional relationship between the respective pixels of the display panel 2 and the slit sections 12 of the parallax barrier 1 does not match an accurate design value. As a result, specifically in the case where the positional relationship is displaced in a horizontal direction, parallax images do not enter the eyes of the viewer properly to cause a deterioration in quality of stereoscopic vision. Therefore, in the embodiment, for example, in the case where a relative positional relationship between sub-pixels of the screen of the display panel 2 and the slit sections 12 of the parallax barrier 1 is displaced due to an assembling error or variations during assembling in the manufacture of the stereoscopic display 10, compensation for parallax displacement is made. According to the embodiment, for example, in the stereoscopic display 10 including a combination of a recent high-definition display panel 2 such as a liquid crystal display and the parallax barrier 1, fine displacement on a pixel scale is allowed to be corrected.

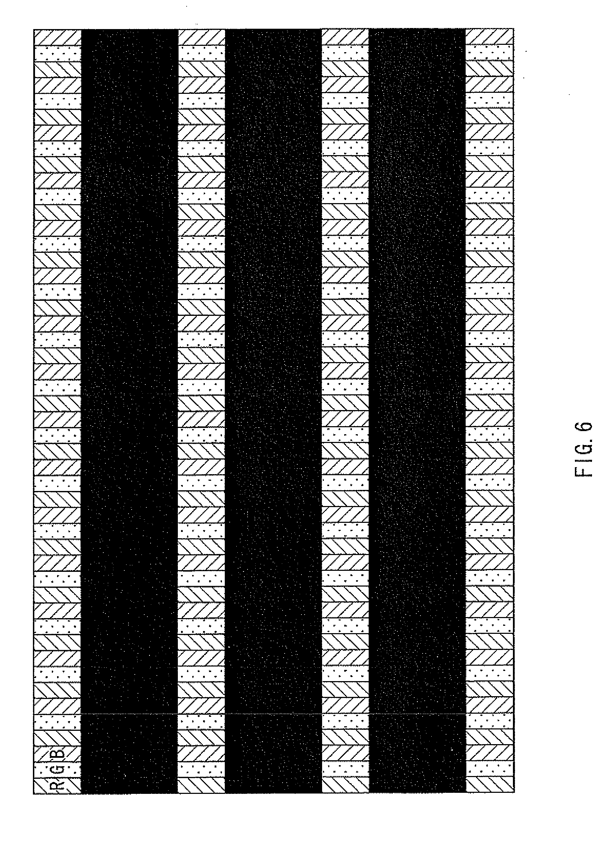

For example, as illustrated in FIG. 3, the camera 4 takes an image of the stereoscopic display 10 (the parallax barrier 1 and the display panel 2) from a specific viewpoint while a specific measurement pattern image is displayed on the display panel 2. The measurement image output section 51 displays, on the display panel 2, for example, a specific measurement pattern image allowing a plurality of parallax images to be cyclically displayed from a sub-pixel to another as illustrated in FIG. 6 which will be described later. In FIG. 3, numbers 1, 2, 3, 4, 5 and 6 assigned to sections of the display panel 2 indicate numbers (viewpoint numbers) assigned to parallax images corresponding to first to sixth viewpoints, respectively. In other words, in FIG. 3, parallax images for 6 parallaxes are cyclically displayed from one of sub-pixels of R, G and B to another as illustrated in FIG. 6. Moreover, FIG. 3 illustrates an example in which an image of the stereoscopic display 10 is taken from a specific viewpoint (in this case, a second viewpoint) where a second parallax image as a specific viewpoint image is viewed through the parallax barrier 1. The parallax barrier 1 ideally separates the parallax composite image into a plurality of parallax images to allow only a specific parallax image to be viewed from a specific viewpoint. Therefore, a different parallax image other than the specific parallax image viewed from the specific viewpoint is observed as parallax displacement. In an example in FIG. 3, in the case where a different parallax image other than the second parallax image is viewed, parallax displacement occurs.

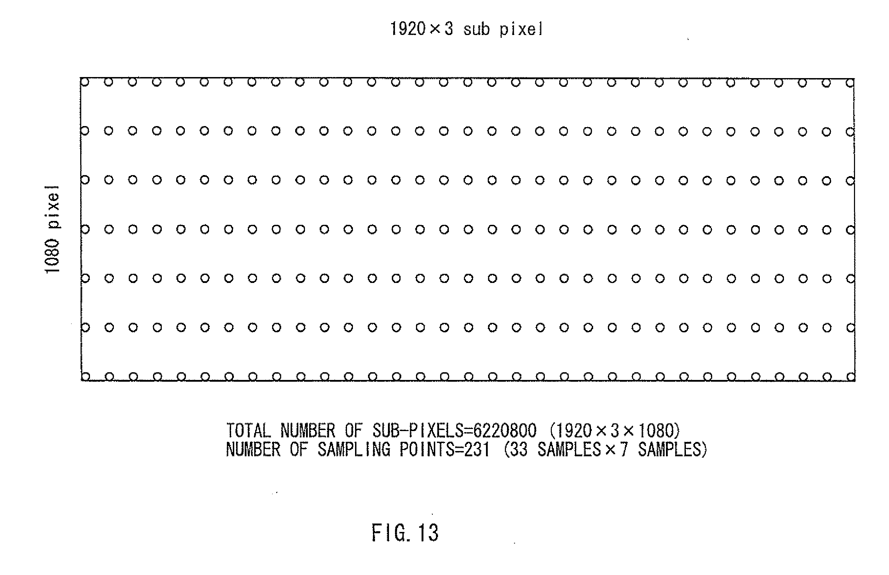

The parallax displacement analyzer 5 is allowed to be configured of a computer such as a PC (personal computer). The parallax displacement detection section 52 analyzes an image taken by the camera 4 to detect parallax displacement. Parallax displacement occurs due to displacement of the relative positional relationship between the respective pixels (sub-pixels) of the display panel 2 and the respective slit sections 12 of the parallax barrier 1. The parallax displacement detection section 52 analyzes a color change or the like in a specific measurement pattern image by a technique which will be described later to detect parallax displacement. The parallax displacement detection section 52 outputs parallax displacement data concerned with analyzed parallax displacement to the data compression section 53. The data compression section 53 compresses and outputs the parallax displacement data supplied from the parallax displacement detection section 52. For example, as illustrated in FIG. 13 which will be described later, the parallax displacement detection section 52 may output parallax displacement data for some pixels sampled from the plurality of pixels.

The data storage memory 31 stores the parallax displacement data compressed by the data compression section 53. The data decompression section 32 decompresses the parallax displacement data stored in the data storage memory 31 to output the parallax displacement data to the parallax displacement correction section 33.

The parallax displacement correction section 33 allows the stereoscopic display 10 to display a stereoscopic image allowing parallax displacement to be reduced. The parallax displacement correction section 33 corrects the parallax composite image to be displayed on the display panel 2 to compensate for parallax displacement in each of the pixels (sub-pixels) of the display panel 2 based on the parallax displacement data supplied from the data decompression section 32. In the case where parallax displacement causing a different parallax image other than a specific parallax image to be viewed from a specific viewpoint occurs, the parallax displacement correction section 33 displaces pixel addresses which are to be assigned to each of a plurality of parallax images for display, thereby to reduce the proportion of the different parallax image viewed from the specific viewpoint.

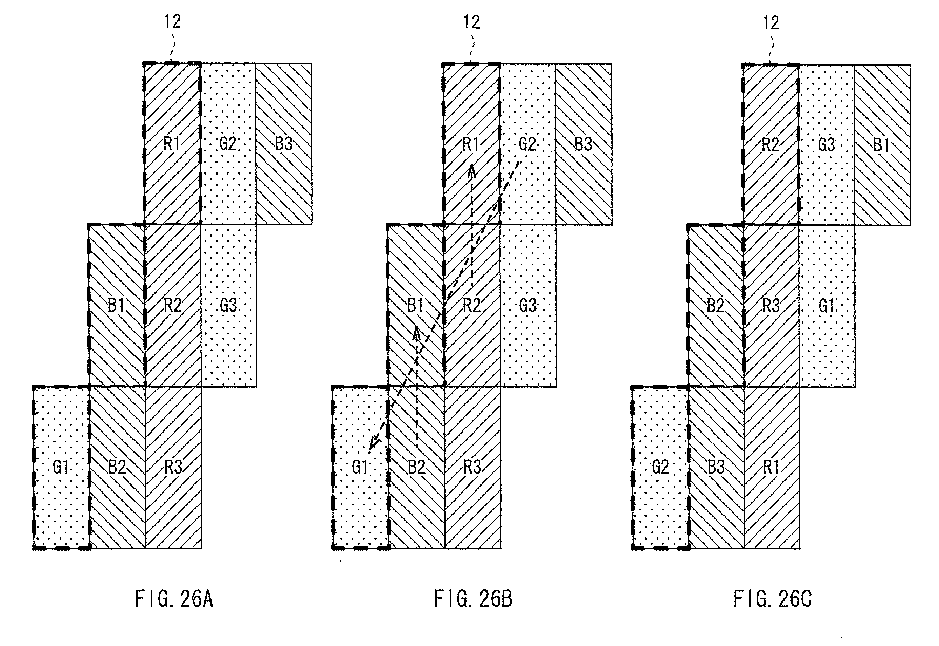

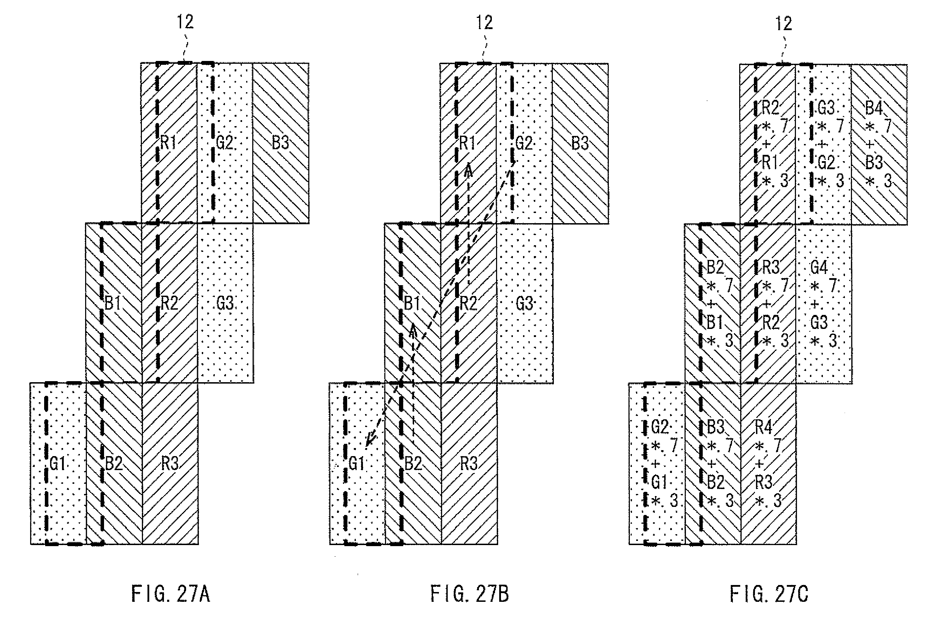

For example, when a magnitude of parallax displacement corresponds to an integral multiple number of pixels (sub-pixels) as illustrated in FIG. 26A which will be described later, the parallax displacement correction section 33 displaces the pixel addresses which are to be assigned to each of the different parallax image and the specific parallax image according to the magnitude of parallax displacement as illustrated in FIGs. 26B and 26C which will be described later. Moreover, for example, when the magnitude of parallax displacement is within one pixel as illustrated in FIG. 27A which will be described later, correction is performed to combine a pixel value of the different parallax image and a pixel value of the specific parallax image according to the magnitude of the parallax displacement as illustrated in FIGs. 27B and 27C which will be described later. It is to be noted that in the case where the parallax displacement detection section 52 outputs parallax displacement data for some pixels sampled from the plurality of pixels, the parallax displacement correction section 33 determines, through an interpolation operation, parallax displacement data for pixels other than the sampled pixels, based on parallax displacement data supplied from the data decompression section 32, and then corrects the parallax composite image, based on parallax displacement data for all pixels obtained through the interpolation operation.

### [Operation of stereoscopic display system]

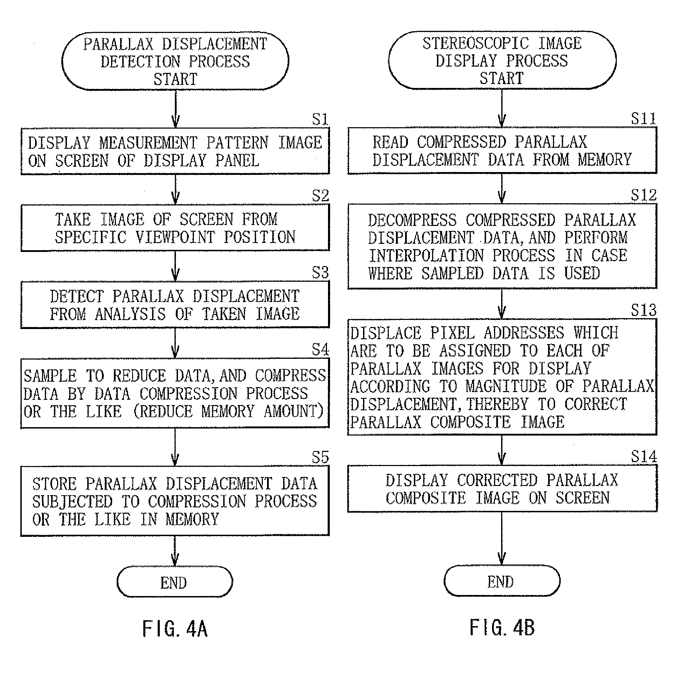

In the stereoscopic display system, in the case where a relative positional relationship between respective pixels (sub-pixels) of the display panel 2 and respective slit sections 12 of the parallax barrier 1 is displaced in the parallax barrier system stereoscopic display 10, a magnitude of parallax displacement causing an issue when achieving stereoscopic vision is determined, and compensation for displacement is made based on the magnitude of parallax displacement. Compensation for parallax displacement is made by correcting the parallax composite image to be displayed on the display panel 2 in each of the pixels based on the magnitude of parallax displacement. Factors causing displacement of the relative positional relationship between the respective pixels (sub-pixels) and the respective slit sections 12 include relative displacement between the pixels and the slit sections 12 in an in-plane direction or relative displacement between the pixels and the slit sections 12 in a direction perpendicular to the screen (variations in distance from the screen of the display panel 2 to the parallax barrier 1). Moreover, the factors include physical expansion and shrinkage, distortion and the like of the screen of the display panel 2 and the parallax barrier 1. In the stereoscopic display system, parallax displacement compensation for such various parallax displacement factors is allowed to be made comprehensively. As will be described below, compensation for parallax displacement is made by the following summary and steps illustrated in FIGs. 4A and 4B.

### (Summary of parallax displacement detection process)

FIG. 4A illustrates a summary of a parallax displacement detection process in the stereoscopic display system. In the parallax displacement analyzer 5, parallax displacement on the whole display screen of the stereoscopic display 10 is measured, and parallax displacement data is produced in the following summary and steps. The parallax displacement data may be obtained only once at the beginning of use of the stereoscopic display 10. Moreover, when the magnitude of parallax displacement is changed due to a temporal change or the like, the parallax displacement data may be obtained again. First, the measurement image output section 51 displays a specific measurement pattern image on the display panel 2 (step S1). Next, an image of the screen of the stereoscopic display 10 is taken by the camera 4 from a specific viewpoint (step S2). Then, the parallax displacement detection section 52 analyzes the image taken by the camera 4 to detect parallax displacement (step S3).

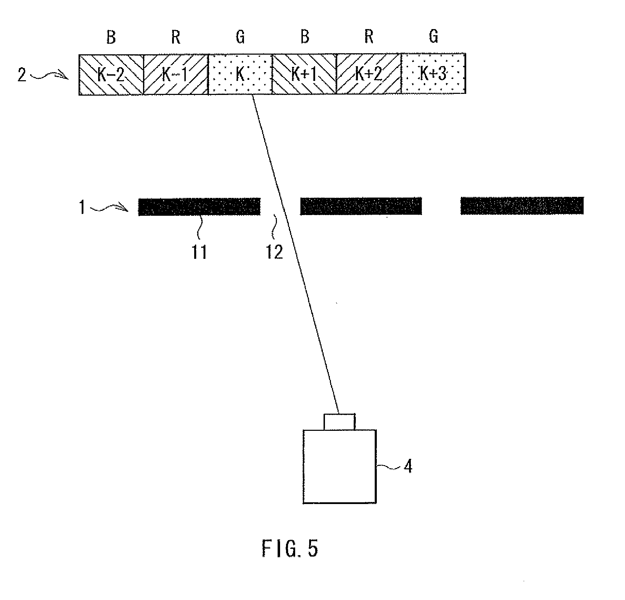

For example, as illustrated in FIG. 5, sub-pixels of respective colors of the display panel 2 correspond to k-2th, k-1th, kth, k+1th, k+2th and k+3th viewpoints in a horizontal direction, respectively, and parallax images corresponding to respective viewpoints are displayed on respective sub-pixels. When an image of the stereoscopic display 10 is taken by the camera 4 from the kth viewpoint in an ideal state without parallax displacement, only sub-pixels corresponding to the kth viewpoint are viewed. In a state where parallax displacement occurs, sub-pixels corresponding to viewpoints other than the kth viewpoint are viewed. Therefore, the sub-pixels corresponding to a specific viewpoint (for example, the kth viewpoint) and other sub-pixels corresponding to other viewpoints emit light according to a specific measurement pattern image, and an image of the stereoscopic display 10 is taken from the specif viewpoint. Then, the taken specific measurement pattern image is analyzed to detect parallax displacement. As will be described later, examples of a method of analyzing the measurement pattern image include a method of analyzing a color change in the measurement pattern image and a method of analyzing a luminance change.

For example, while a specific measurement pattern image is displayed on the display panel 2 to allow both of sub-pixels of a specific color corresponding to a specific viewpoint and sub-pixels of other colors corresponding to other viewpoints to simultaneously emit light, an image of the stereoscopic display 10 is taken from the specific viewpoint. Then, a color change in the specific measurement pattern image taken from the specific viewpoint is analyzed to detect parallax displacement (refer to first and second specific examples which will be described later). Alternatively, while a specific measurement pattern image is displayed on the display panel 2 to allow both of sub-pixels corresponding to the specific viewpoint and sub-pixels corresponding to other viewpoints to emit light in a time-divisional manner, an image of the stereoscopic display 10 is taken from the specific viewpoint. Then, a luminance change in the specific measurement pattern image taken from the specific viewpoint is analyzed to detect parallax displacement (refer to a third specific example which will be described later).

In the parallax displacement detection section 52, sampling is performed as necessary to produce reduced parallax displacement data. Moreover, in the data compression section 53, the parallax displacement data is compressed by an existing data compression process or the like to produce compressed parallax displacement data (step S4). Thus, a memory amount to be stored in the data storage memory 31 is reduced. The parallax displacement data subjected to the compression process or the like is written and stored from the data compression section 53 to the data storage memory 31 of the stereoscopic display 10 (step S5).

### (Summary of stereoscopic image display process)

FIG. 4B illustrates a summary of a stereoscopic image display process with use of parallax displacement data in the stereoscopic display system. In the stereoscopic display 10, in the case where a parallax composite image for stereoscopic display is displayed on the display panel 2, the parallax composite image is corrected based on the parallax displacement data by the following summary and steps, and then displayed. First, the compressed parallax displacement data stored in the data storage memory 31 is read out (step S11). The read parallax displacement data is decomposed in the data decompression section 32 to be supplied to the parallax displacement correction section 33. In the case where sampled parallax displacement data is used, the parallax displacement correction section 33 performs an interpolation operation to determine parallax displacement data for pixels (step S12). The parallax displacement correction section 33 performs pixel address displacement or the like to compensate for parallax displacement from each of the pixels (sub-pixels) of the display panel 2 based on the parallax displacement data, thereby correcting the parallax composite image to be displayed on the display panel 2 (step S13). The corrected parallax composite image is displayed on the screen of the display panel 2 (step S14).

### (First specific example of parallax displacement detection process)

Specific examples of the above-described parallax displacement detection process will be described in detail below.

The measurement image output section 51 displays a specific measurement pattern image on the display panel 2. An image in which measurement patterns of R, G and B are repeated from one parallax to another in parallax order such as order of R, G, B, R, G, B, ... is prepared as image data to be displayed on the screen of the display panel 2. Moreover, to reduce an influence of parallax displacement in a vertical direction on measurement data, patterns in a vertical direction of the image are reduced in a relative positional relationship between pixels (sub-pixels) on the screen and the slit sections 12 of the parallax barrier 1. Thus, in a horizontal direction strongly and directly affecting parallax in stereoscopic display, displacement of the relative positional relationship between the sub-pixels of the screen and the slit sections 12 causes parallax displacement, and the parallax displacement directly causes a color change. On the other hand, even if displacement occurs in the vertical direction, patterns are reduced (even if displacement occurs, adjacent patterns in the vertical direction are removed); therefore, other colors do not appear but black appears, and a color change does not occur accordingly. FIG. 6 illustrates an example of a measurement pattern image in this method. In a pattern example in FIG. 6, the case of 6 parallaxes is illustrated. Colors are arranged in parallax order of R, G, B, R, G, B, ... from a left side of the image. Moreover, 2/3 of the pixels in the vertical direction are removed. In FIG. 6, rectangular patterns of R, G and B indicate sub-pixels. Then, adjacent rectangular patterns of R, G and B configure one pixel in the case where typical two-dimensional display is performed. White is displayed by a combination of three colors R, G and B, In FIG. 6, a black section is a pixel not emitting light and being displayed black. In other words, white horizontal lines are displayed at vertical intervals of two lines. Such a pattern image is displayed on the screen. In addition to the example illustrated in FIG. 6, as a measurement pattern image, a pattern image suitable for easily performing data analysis in a following step may be appropriately used according to the magnitude of parallax displacement, deviation or the like.

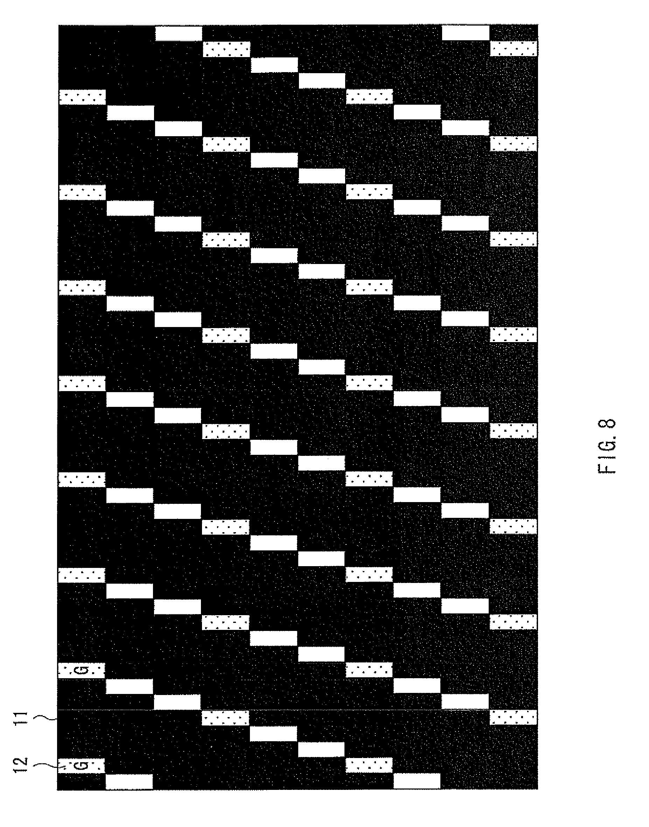

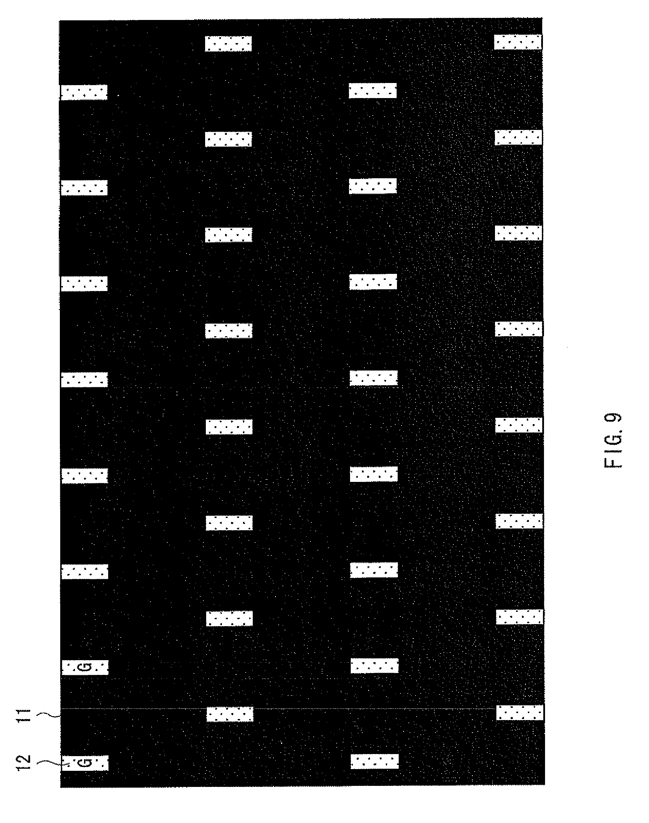

While the measurement pattern image as illustrated in FIG. 6 is displayed, an image of a color stripe pattern of R, G and B on a screen viewed from one viewpoint is taken by the camera 4. The taken image does not need resolution allowing sub-pixels to be distinguishable, and it is only necessary to obtain a stripe pattern where colors R, G and B are gradually changed. FIG. 3 illustrates an example in which an image of the stereoscopic display 10 is taken from a specific viewpoint where the color G in a second parallax image (a second viewpoint image) is viewable as a specific viewpoint image. FIG. 8 schematically illustrates a combination of the measurement pattern image illustrated in FIG. 6 and the parallax barrier illustrated in FIG. 7 in the case where the stereoscopic display 10 is viewed from the specific viewpoint in FIG. 3. FIG. 9 illustrates a state where the slit sections 12 corresponding to sections displayed black in the measurement pattern image are colored black. When the state illustrated in FIG. 9 is observed with an image taken by the camera 4, the sub-pixels are not viewed separately, and a uniform color appears in the entire image. In the example in FIG. 9, ideally, green uniformly appears in the entire image. An ideal case at this time is the case where the relative positional relationship between respective pixels (sub-pixels) of the display panel 2 and the respective slit sections 12 is not displaced (no parallax displacement occurs).

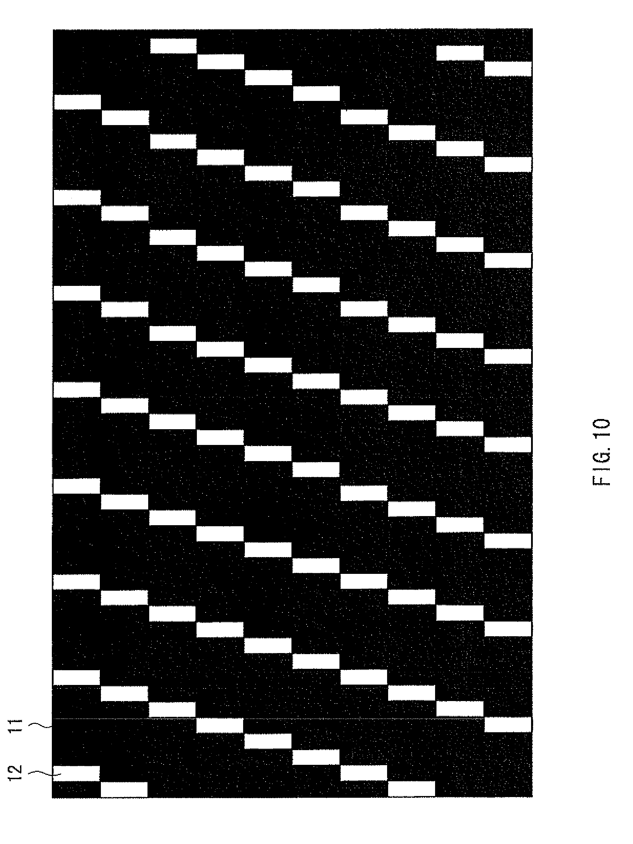

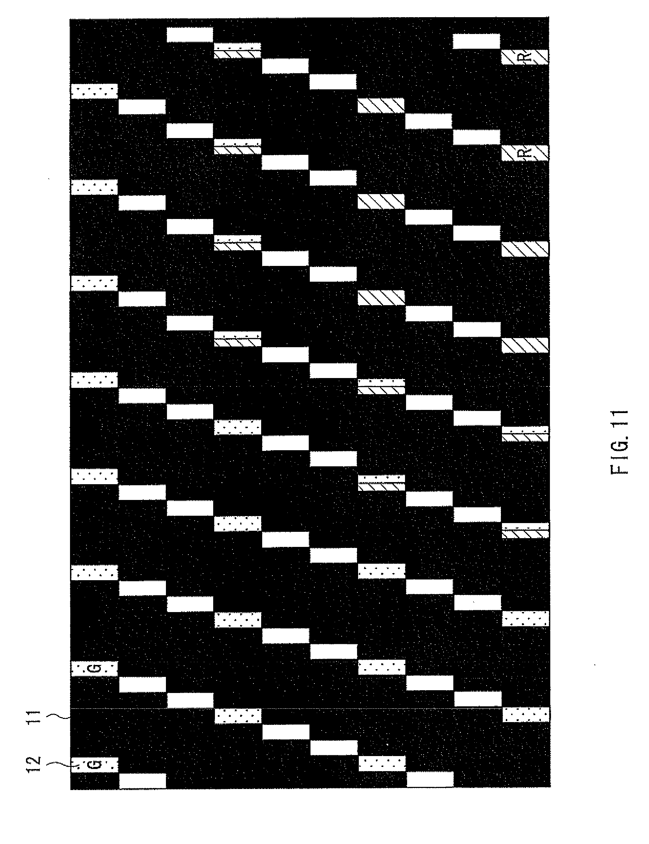

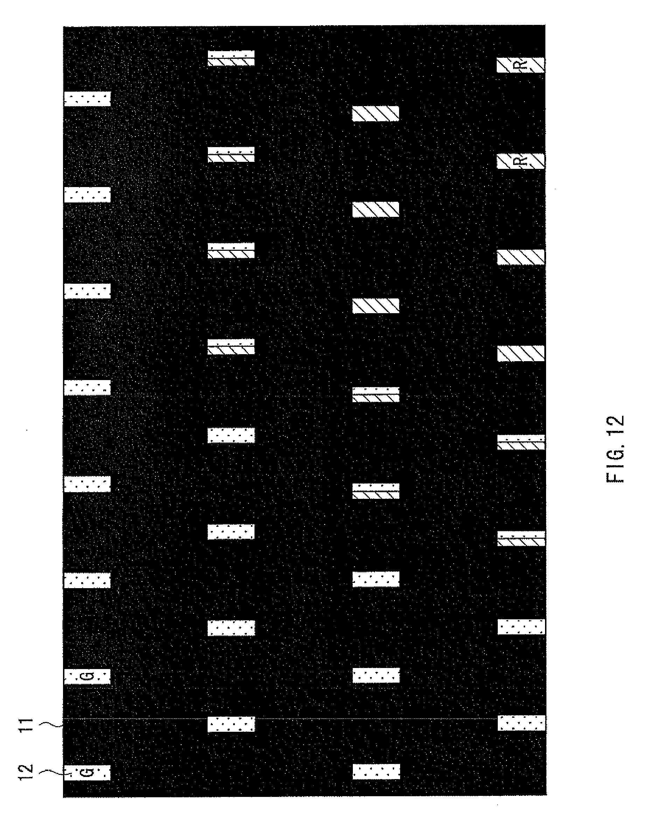

In the case where the relative positional relationship between the sub-pixels of the screen and the slit sections 12 is displaced, parallax displacement is detected by analysis of the taken image. As an example in which the relative positional relationship is displaced, as illustrated in FIG. 10, the case where the positions of the slit sections 12 of the parallax barrier 1 are displaced from an ideal barrier pattern in FIG. 7 will be described below. In FIG. 10, a state where the positions of the slit sections 12 on a lower right side are displaced to the left by 1 sub-pixel or 0.5 sub-pixels is illustrated. FIG. 11 is an illustration of a state where an image of the stereoscopic display 10 is taken by the camera 4 in this state while displaying the measurement pattern image illustrated in FIG. 6. Moreover, FIG. 12 is an illustration of a state where the slit sections 12 not receiving light of the parallax barrier 1 are displayed black. FIG. 12 illustrates a state where 1 sub-pixel or 0.5 sub-pixels of the color R on the left of sub-pixels of the color G are viewed in sections where the positions of the slit sections 12 on a lower right side are displaced to the left by 1 sub-pixel or 0.5 sub-pixels. When this state is observed with an image taken by the camera 4, sub-pixels are not viewed separately, and the entire image is tinged with colors. However, green does not appear uniformly in the entire image, and in this drawing, a state where green is gradually changed to red is viewed. In the parallax displacement detection section 52, this color change is analyzed to determine a magnitude of parallax displacement. A specific method of determining a magnitude of displacement will be described later.

To write and store data to the data storage memory 31 in the stereoscopic display 10, data is sampled to be reduced. Moreover, the data is compressed by an existing data compression process or the like by the data compression section 53. A method of sampling and reducing data is illustrated in FIG. 13. As parallax displacement data for compensation for parallax displacement, a number equal to the number of sub-pixels of data are necessary, and in a full-HD screen as illustrated in FIG. 13, the total number of sub-pixels is 6220800 (1920x3x1080); therefore, an enormous amount of data is obtained. However, an actual magnitude of parallax displacement changes gradually; therefore, data is allowed to be obtained from sampling points in FIG. 13 to achieve data reduction. In this case, the number of parallax displacement data is equal to the number of sampling points=231 (33 samples××7 samples). Moreover, even if data is reduced, interpolation is easily performed when the parallax displacement data is used in the parallax displacement correction section 33; therefore, only data at the sampling points are taken as parallax displacement data. Moreover, the sampled parallax displacement data is compressed by an existing compression technique or the like.

The parallax displacement data subjected to the compression process or the like is written and stored from the data compression section 53 to the data storage memory 31 of the stereoscopic display 10.

### (First specific example of method of determining parallax displacement from image taken by camera 4)

A specific example of a method of analyzing an image taken by the camera 4 to determine a magnitude of parallax displacement will be described below. Basically, the magnitude of parallax displacement is determined from a stripe pattern of colors R, G and B of a taken image.

In a first step, the signal levels of R, G and B in a measurement system are adjusted. When white balance or the like of the screen of the display panel 2 or the camera 4 is not right, an error occurs when the taken image is analyzed to determine the magnitude of parallax displacement; therefore, first, adjustment of white balance or the like is performed, and then the signal levels of R, G and B are adjusted. As an adjustment method, only an R signal, a G signal or a B signal is supplied to all parallaxes, and the values of colors R, G or B are adjusted to be equal to one another in an image taken by the camera 4 in the case where only the R signal, the G signal or the B signal is supplied.

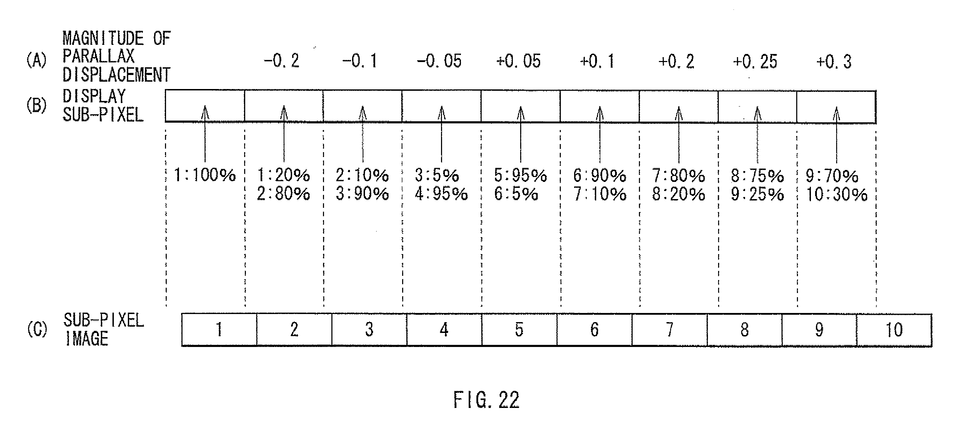

In a second step, a measurement pattern image is displayed on the screen of the display panel 2, and is taken by the camera 4 from one viewpoint. In a third step, a section corresponding to the screen is cut out of the taken image, and analysis of the section starts. In a fourth step, the section corresponding to the screen of the taken image is separated into the colors R, G and B. In a fifth step, the values of the colors R, G and B separated are determined from one sub-pixel to another. In a sixth step, a ratio of a color with the largest value and a color with the second largest value in the determined values of the colors R, G and B is determined. In a sub-pixel with a ratio of 50%, 50% of an adjacent sub-pixel is viewed; therefore, the magnitude of parallax displacement is -0.5 or +0.5 (refer to FIG. 22).

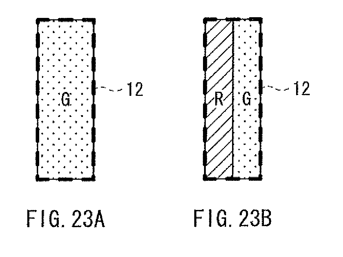

In a seventh step, in a sub-pixel of a color with the largest value in the values of the colors R, G and B has a value equal to the values of the color R, G and B which become equal to one another by adjustment of the signal levels of R, G and B in the first step, no parallax displacement occurs, and the value of parallax displacement is 0. In an eighth step, in the case where a relationship between the slit sections 12 of the parallax barrier 1 and the sub-pixels of the display panel 2 is as illustrated in FIG. 23A without parallax displacement, a single color is displayed. A temporary magnitude of parallax displacement in this case is 0. In the case where the relationship between the slit sections 12 and the sub-pixels of the display panel 2 is as illustrated in FIG. 23B and parallax displacement occurs (in the case of FIG. 23B, the magnitude of parallax displacement is 0.5), a color changed from green is viewed. In FIG. 23B, light from an adjacent sub-pixel enters, and green+red=yellow is viewed. In this case, the ratio of green and red is allowed to be determined from the viewed color. More specifically, the coordinates of a measurement chromaticity point of a mixed color with respect to two chromaticity points at 100% of green and 100% of red in xy or uv chromaticity coordinates are determined, and are prorated by distances to chromaticity points at 100% of green and 100% of red. The same technique is allowed to be used for a mixture of green and blue pixels or a mixture of red and blue pixels. Therefore, the magnitude of parallax displacement of each pixel is temporally set to a value larger than 0 and smaller than 1.0.

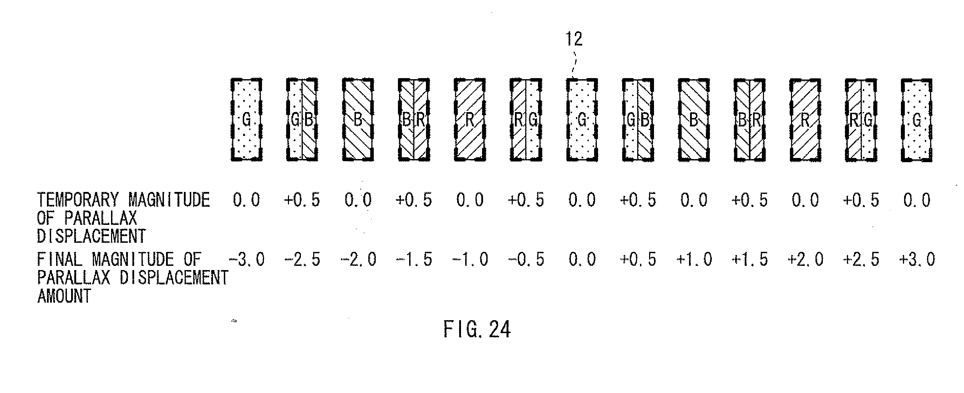

In a ninth step, a final magnitude of parallax displacement is determined. Assume that the magnitudes of parallax displacement in the respective sub-pixels keep continuity. In other words, assume that the magnitudes of parallax displacement of adjacent sub-pixels are substantially equal to one another and are changed not sharply but gradually. Under this condition, a final magnitude of parallax displacement is determined from the temporary magnitude of parallax displacement determined in the eighth step of each sub-pixel. At this time, together with continuity, a color with the largest value in the values of colors R, G and B in each sub-pixel is considered. The measurement pattern image is image data to be displayed on the screen of the display panel 2 in respective parallaxes, and is an image in which R, G and B are repeated from one parallax to another in parallax order such as order of R, G, B, R, G, B, ...; therefore, the direction of parallax displacement is determined by a color shift. In the case where the parallax displacement gradually occurs in one direction, colors with the largest signal value are changed in order of R, G, B, R, G B, ... set to the parallax order. Moreover, in the case where the parallax displacement gradually occurs in the opposite direction, the colors with the largest signal value are changed in order of B, G, R, B, G, R, ..., that is, in inverse order of R, G, B, R, G, B, ... set to the parallax order. The displacement direction is determined based on the color shift. Therefore, when continuity and the color change are checked, a ± value of each sub-pixel is allowed to be determined. As the magnitude of parallax displacement is continuously changed, a final magnitude of parallax displacement is allowed to be determined. As illustrated in FIG. 24, the final magnitude of parallax displacement is allowed to be determined from the temporary magnitude of parallax displacement temporarily set in the eighth step and a color change amount.

Thus, the magnitude of parallax displacement of each sub-pixel used for parallax displacement correction is allowed to be determined.

### (Second specific example of method of parallax displacement detection process and parallax displacement determination)

In the parallax displacement detection process in the first specific example, as a precondition, stereoscopic display is performed with the number of parallaxes equal to a multiple of 3, such as 3 viewpoints, 6 viewpoints or 9 viewpoints. In the case where the number of parallaxes is not equal to a multiple of 3, such as 5 viewpoints, when the measurement pattern image illustrated in FIG. 6 is displayed, even in the case where no parallax displacement occurs, as will be described below, a same color is not observed through the parallax barrier 1.

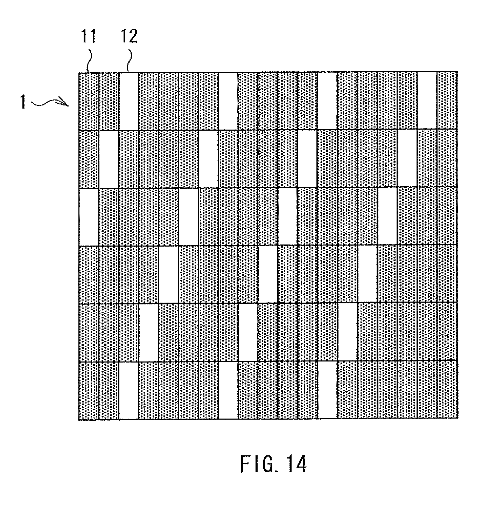

The case where the parallax barrier 1 for 5 viewpoints is used will be described below as an example. FIG. 14 illustrates a configuration example of the parallax barrier 1 of a step barrier system for 5 viewpoints. One slit section 12 is arranged at intervals of 5 sub-pixels of the display panel 2 in the horizontal direction. Moreover, when the size of the sub-pixel has a ratio of 1 horizontal:3 vertical, the slit sections 12 are successively arranged in an oblique direction at an angle corresponding to 1 horizontal:3 vertical.

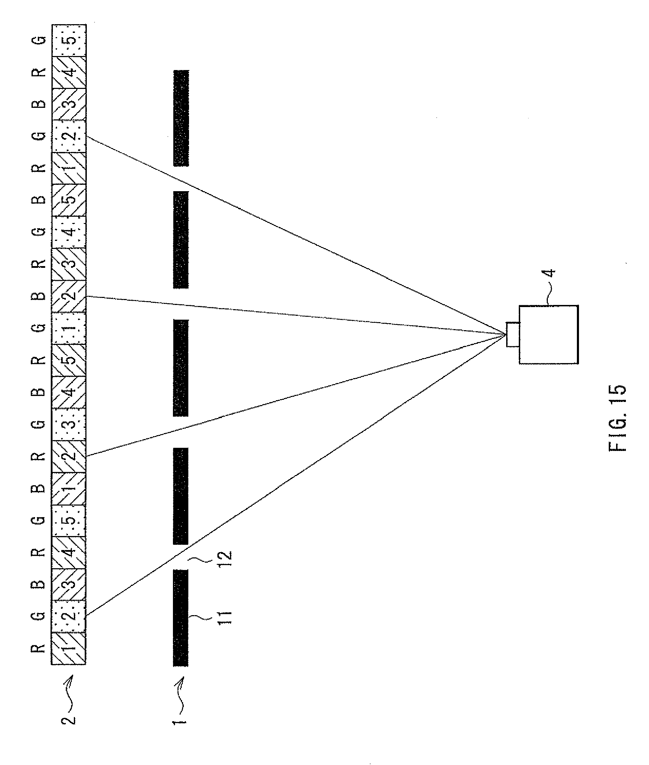

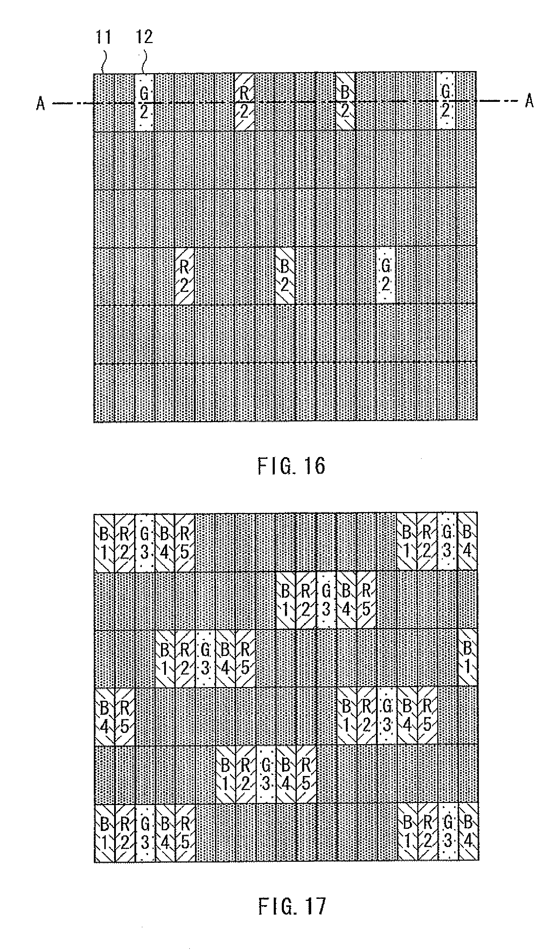

FIGs. 15 and 16 schematically illustrate a state where the measurement pattern image illustrated in FIG. 6 is viewed from the second viewpoint through the parallax barrier in FIG. 14 in the case where stereoscopic display with 5 viewpoints is performed in the stereoscopic display 10. FIG. 15 corresponds to a sectional view taken along a line A-A of FIG. 16- Numbers 1, 2, 3, 4 and 5 assigned to sub-pixels of the display panel 2 indicate numbers (viewpoint numbers) assigned to parallax images corresponding to first to fifth viewpoints positions, respectively. In an ideal state without parallax displacement, only a parallax image (a second viewpoint image) corresponding to the second viewpoint on the entire screen is taken by the camera 4. In first specific example, only sub-pixels of a same color (G) in the taken image are viewed as illustrated in FIG. 9. However, in FIGs. 15 and 16, three colors R, G and B are viewed from the second viewpoint, and the image with a single color is not displayed. Therefore, it is difficult to measure a magnitude of parallax displacement by the method in first specific example.

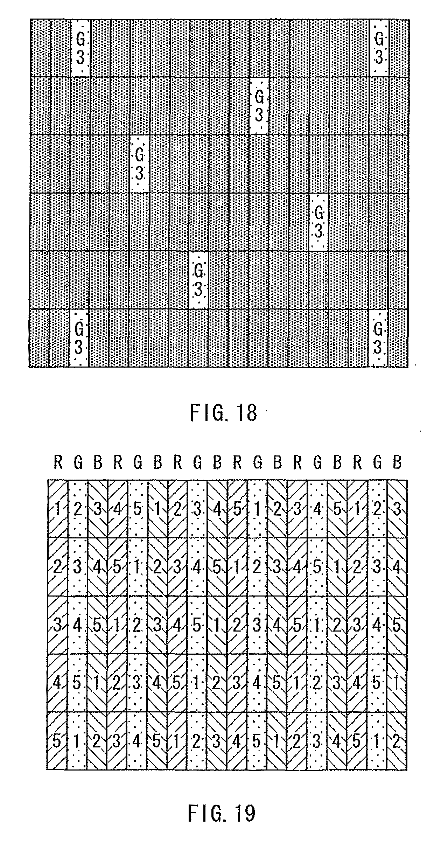

Therefore, to allow an image taken by the camera 4 through the parallax barrier 1 to have a single color in the case where no parallax displacement occurs, it is necessary to determine a different measurement pattern image from that in FIG. 6. In the case of 5 viewpoints, a measurement pattern image illustrated in FIG. 17 may be used. In the case of 5 viewpoints, an arbitrary viewpoint (for example, a third viewpoint) selected from first to fifth viewpoints is specified as a specific viewpoint, and one arbitrary color (in this case, G) selected from the colors R, G and B is determined as a color to be displayed on sub-pixels corresponding to the specific viewpoint. Then, an image allowing only sub-pixels corresponding to G in sub-pixels corresponding to the third viewpoint as the specific viewpoint and sub-pixels on right and left sides thereof corresponding to other viewpoints (the first viewpoint, the second viewpoint, the fourth viewpoint and the fifth viewpoint) to emit light is used as a measurement pattern image (refer to FIG. 17). Therefore, in an ideal state without parallax displacement, when the measurement pattern image is taken by the camera 4 from the specific third viewpoint, for example, as illustrated in FIG. 18, a single color (G) is viewed in the entire screen. In the case where parallax displacement occurs, a plurality of colors instead of one color are viewed; therefore, parallax displacement is allowed to be detected through analyzing a color change in the taken image by the same principle as that in first specific example. Thus, even in the case where stereoscopic display with a number of viewpoints not equal to a multiple of 3 is performed, the magnitude of parallax displacement is allowed to be determined.

### (Third specific example of method of parallax displacement detection process and parallax displacement determination)

In the first and second specific examples, parallax displacement is detected through analyzing a color change in the measurement pattern image; however, as a third specific example, a technique of detecting parallax displacement without use of a color change will be described below. As in the cases in FIGs. 3 and 15, in an ideal state without parallax displacement, the camera 4 is arranged near a position where only light from sub-pixels corresponding to a specific viewpoint (in FIGs. 3 and 15, the second viewpoint) enters and light from sub-pixels corresponding to other viewpoints does not enter.

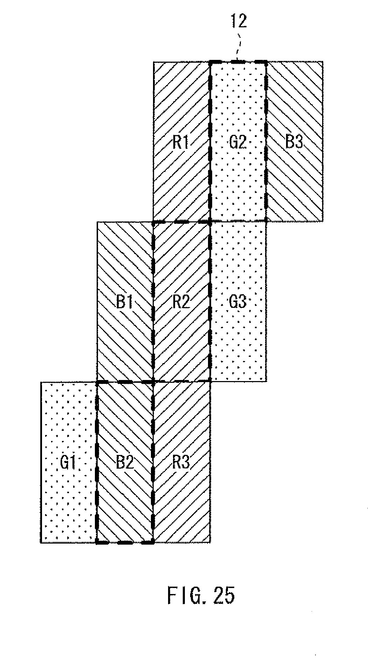

As in the case of the second specific example, the case where the parallax barrier 1 (refer to FIG. 25) for 5 viewpoints is used will be described below. FIG. 19 illustrates a correspondence relationship between respective sub-pixels of the display panel 2 for 5 viewpoints and respective viewpoints. In FIG. 19, numbers 1, 2, 3, 4 and 5 assigned to sub-pixels of the display panel 2 indicate numbers (viewpoint numbers) assigned to parallax images corresponding to first to fifth viewpoints, respectively. In this specific example, an image of the stereoscopic display 10 is taken from a specific viewpoint (for example, the second viewpoint), and a specific measurement pattern image is displayed on the display panel 2 to allow both of sub-pixels corresponding to the specific viewpoint and sub-pixels corresponding to other viewpoints to emit light in a time-divisional manner. Sub-pixels corresponding to viewpoints (for example, the first viewpoint and the third viewpoint) adjacent to the specific viewpoint (for example, the second viewpoint) in the sub-pixels corresponding to other viewpoints emit light in a time-divisional manner. In this case, sub-pixels corresponding to all viewpoints emit light sequentially in a time-divisional manner. For example, first, only sub-pixels corresponding to the first viewpoint illuminate (emit light), and other sub-pixels turn off. At this time, sub-pixels of all colors R, G and B corresponding to the first viewpoint illuminate, and a first viewpoint image is taken by the camera 4 from the specific viewpoint (for example, the second viewpoint), and recorded. Then, sub-pixels of all colors R, G and B corresponding to the second viewpoint illuminate, and a second viewpoint image is taken by the camera 4 from the specific viewpoint (for example, the second viewpoint), and recorded. Then, third, fourth and fifth viewpoint images are taken and recorded in the same manner. It is to be noted that even if all sub-pixels of R, G and B illuminate in one viewpoint image, the size of each sub-pixel is sufficiently small; therefore, shading of white and black is viewed in the entire screen.

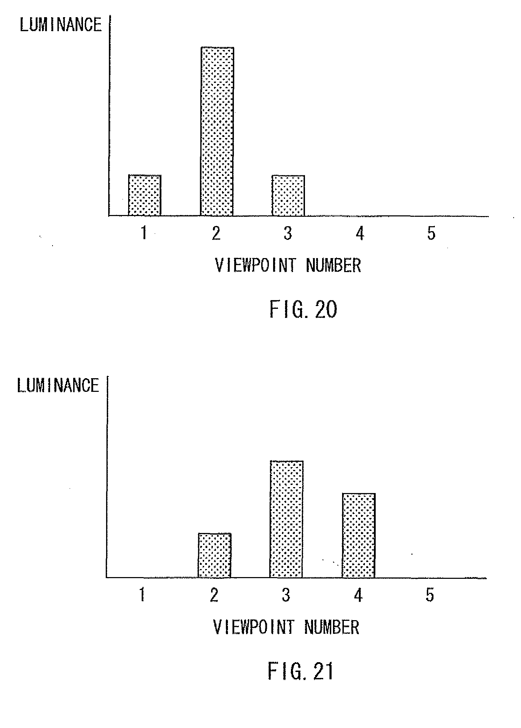

Then, distributions of luminances of illuminating pixels on the screen from respective viewpoints are evaluated. Graphs illustrated in FIGs. 20 and 21 indicate, on a certain position on the screen, luminances of the taken images from respective viewpoints.

In the case where the camera 4 is arranged in the second viewpoint, in an ideal state without parallax displacement, the luminance of the second viewpoint image is the highest in 5 viewpoint images, and the luminances of the first viewpoint image and the third viewpoint image adjacent to the second viewpoint image are lower and substantially equal to each other (refer to FIG. 20). On the other hand, in the case where parallax displacement occurs, for example, the luminances are as illustrated in FIG. 21. When not only light from the second viewpoint image but also light from the third viewpoint image enters the camera 4 due to parallax displacement, the luminance of the first viewpoint image is reduced, and the luminance of the third viewpoint image is increased.

For example, the magnitude of parallax displacement is allowed to be determined as follows. As respective viewpoint images are displayed in a time-divisional manner, the barycentric position of luminance of each viewpoint image at an arbitrary point on the screen is allowed to be determined. A barycentric position change amount in a center of the screen of the stereoscopic display 10 is allowed to be determined by subtracting the barycentric position in each viewpoint image.

For example, the screen is divided into regions (for example, 32×32 regions), and a luminance distribution in each viewpoint image illustrated in FIGs. 20 and 21 is determined in each of the regions. Assume that the barycentric position of viewpoint luminance in a screen center is 2.5. In the case where no parallax displacement occurs, when the camera 4 is arranged in the second viewpoint, the magnitude of parallax displacement in the screen center is determined to be 2.5-2=+0.5. Then, in the case where barycentric viewpoint at a right end of the screen is 3.5, a difference between 3.5 and 2.0, that is, +1.5 is allowed to be determined as the magnitude of parallax displacement.

With use of the technique in third specific example, the magnitude of parallax displacement is allowed to be determined by a luminance amount without use of a color change amount. A calculation amount by determining the color change amount is larger than that by determining a luminance change amount; therefore, the technique of determining the magnitude of parallax displacement by the luminance amount has an advantage that the configuration of the parallax displacement detection section 52 is allowed to be simplified. Moreover, the case where the number of viewpoints is 5 is described above as an example; however, the technique has an advantage that the technique is applicable irrespective of the number of viewpoints in stereoscopic display.

### (Specific example of stereoscopic image display process)

A specific example of the above-described stereoscopic image display process will be described below.

First, compressed parallax displacement data stored in the data storage memory 31 is read out. Then, the read parallax displacement data is decomposed in the data decompression section 32 to be supplied to the parallax displacement correction section 33. In the case of sampled parallax displacement data, the parallax displacement correction section 33 determines the parallax displacement data for pixels through an interpolation operation. At this time, linear interpolation is easiest. When the magnitudes of parallax displacement between sampling points are determined by linear interpolation, the parallax displacement data for sub-pixels of the entire screen is obtained.. As a sampling interpolation method, not only linear interpolation, but also curve interpolation or any other method may be appropriately used.

The parallax displacement correction section 33 performs pixel address displacement or the like to compensate for parallax displacement from each of the pixels (sub-pixels) of the display panel 2 based on the obtained parallax displacement data for the sub-pixels of the entire screen, thereby correcting the parallax composite image to be displayed on the display panel 2. A basic correction method is illustrated in FIG. 22. A part (A) in FIG. 22 illustrates an example of the magnitude of parallax displacement. A part (B) in FIG. 22 illustrates an example where an image of a sub-pixel in a part (C) in FIG. 22 is corrected according to the magnitude of parallax displacement in the part (A) in FIG. 22. In the part (B) in FIG. 22, for example, in the case where the magnitude of parallax displacement is +0.1, an image of a sub-pixel is created by combining 90% of a pixel value on a left side and 10% of a pixel value on a right side.

Moreover, FIGs. 25 to 27A, 27B and 27C illustrate a specific example of correction of the parallax composite image. FIG. 25 illustrates a relationship between sub-pixels and the slit sections 12 in a state where no parallax displacement occurs. In FIGs. 25 to 27A, 27B and 27C, R1, G1 and B1 correspond to a parallax image with the number 1 (the first viewpoint) in FIG. 3, R2, G2 and B2 correspond to a parallax image with the number 2 (the second viewpoint) in FIG. 3, and R3, G3 and B3 correspond to a parallax image with the number 3 (the third viewpoint) in FIG. 3. As no parallax displacement occurs, in FIG. 25, the slit sections 12 are located on the pixels G2, R2 and B2. FIGs. 26A, 26B and 26C illustrate the case where the magnitude of parallax displacement is -1.0. The slit sections 12 are shifted to the left by 1 sub-pixel with respect to an ideal state in FIG. 25. In the case where as illustrated in FIG. 26A, the magnitude of parallax displacement corresponds to one sub-pixel (or an integral multiple number of sub-pixels such as 2 sub-pixels or 3 sub-pixels), as illustrated in FIGs. 26B and 26C, the parallax displacement correction section 33 displaces the pixel addresses which are to be assigned to each of other parallax images (in this case, R1, R3 or the like) and a specific parallax image (in this case, R2 or the like) for display according to the magnitude of the parallax displacement. Accordingly, the sub-pixels directly below the slit sections 12 display the values of R2, G2 and B2 to perform correction.

FIGs. 27A, 27B and 27C illustrate the case where the magnitude of parallax displacement is -0.7. In the case where the magnitude of parallax displacement is within one pixel, as illustrated in FIGs. 27B and 27C, correction is performed according to the magnitude of parallax displacement to combine the pixel value (in this case, R1, R3 or the like) of another parallax image and the pixel value of the specific parallax image (in this case, R2 or the like). In FIG. 27A, R1, B1 and G1 are located in 70% of positions directly below the slit sections 12, and R2, B2 and G2 are located in 30% of the positions directly below the slit sections 12. The slit sections 12 are located across sub-pixels; therefore, an image to be displayed on each sub-pixel is determined according to the magnitude of parallax displacement. More specifically, in original sub-pixels R1, B1 and G1 located in 70% of the positions directly below the slit sections 12, a combination of 70% of sub-pixels R2, B2 G2 corresponding to the second viewpoint and 30% of sub-pixels R1, B2 and G1 corresponding to the first viewpoint is included. In original sub-pixels R2, B2 and G2, a combination of 70% of sub-pixels R3, B3 and G3 corresponding to the third viewpoint and 30% of sub-pixels R2, B2 and G2 corresponding to the second viewpoint is included.

As described above, in the case where an image is displayed on the screen of the display panel 2, sub-pixels of a displayed image correspond to sub-pixels of the screen of the display panel 2, respectively. In the case where parallax displacement occurs, correction is performed to move the image by parallax displacement and display the image; however, in the case where the magnitude of the parallax displacement is an integer at this time, sub-pixels are shifted by the magnitude of parallax displacement (refer to FIGs. 25 and 26A, 26B and 26C). However, in the case where the magnitude of the parallax displacement is not an integer, sub-pixels are not allowed to be simply shifted; therefore, images are combined by a method illustrated in FIGs. 27A, 27B and 27C. A corrected image is created by determining a sub-pixel value according to a ratio based on the fractional portion of the magnitude of parallax displacement of a sub-pixel without the integer portion thereof.

A corrected parallax composite image is displayed on the screen of the display panel 2.

### [Effects]

The following effects are obtained in the stereoscopic display system according to the embodiment.

The parallax displacement data is stored in the data storage memory 31, and based on the parallax displacement data stored in the data storage memory 31, the parallax composite image is corrected to compensate for parallax displacement in each pixel (each sub-pixel); therefore, favorable stereoscopic image display with less parallax displacement in each pixel is allowed to be performed on the entire screen. In particular, the magnitude of parallax displacement of the entire screen is determined, by image processing, from only an image taken by the camera 4 from one viewpoint; therefore, analysis is allowed to be performed with use of a PC or the like, and analysis is allowed to be easily performed for a few seconds to a few tens of seconds. Therefore, analysis is performed at a speed capable of responding to a speed of a mass-production line.

### (Second Embodiment)

Next, a stereoscopic display system according to a second embodiment of the technology will be described below. It is to be noted that like components are denoted by like numerals as of the stereoscopic display system according to the first embodiment, and will not be further described.

In the first embodiment, the specific measurement pattern image is displayed on the display panel 2, and an image of the screen is taken by the camera 4, and the image is analyzed, thereby obtaining parallax displacement data for the entire screen. The parallax displacement may be detected by, for example, measurement by a microscope or a known measurement technique by a laser measuring instrument in related art.

### (Third Embodiment)

Next, a stereoscopic display system according to a third embodiment of the technology will be described below. It is to be noted that like components are denoted by like numerals as of the stereoscopic display system according to the first embodiment, and will not be further described.

In the first embodiment, for example, in the case where a relative positional relationship between sub-pixels of the screen of the display panel 2 and the slit sections 12 of the parallax barrier 1 is displaced due to an assembling error, variations or the like during assembling in the manufacture of the stereoscopic display 10, compensation for parallax displacement is made.

The embodiment relates to compensation not during production of the stereoscopic display 10 but during use of the stereoscopic display 10. In the case where continuous use of the stereoscopic display 10 causes displacement in a relative positional relationship between the sub-pixels of the screen and the slit sections 12 of the parallax barrier 1 due to a temporal change, the same parallax displacement detection process as that in the first embodiment is performed to produce a new magnitude of parallax displacement at this time, and the new magnitude of parallax displacement is written to the data storage memory 31 in the stereoscopic display 10 to be replaced with an old magnitude of parallax displacement. During use of the stereoscopic display 10, as for parallax displacement, the stereoscopic display 10 is allowed to be returned to a state without parallax displacement at the production of the stereoscopic display 10. In the embodiment, for example, such compensation is allowed to be made as maintenance of the stereoscopic display 10.

### (Fourth Embodiment)

Next, a stereoscopic display system according to a fourth embodiment of the technology will be described below. It is to be noted that like components are denoted by like numerals as of the stereoscopic display system according to the first embodiment, and will not be further described.

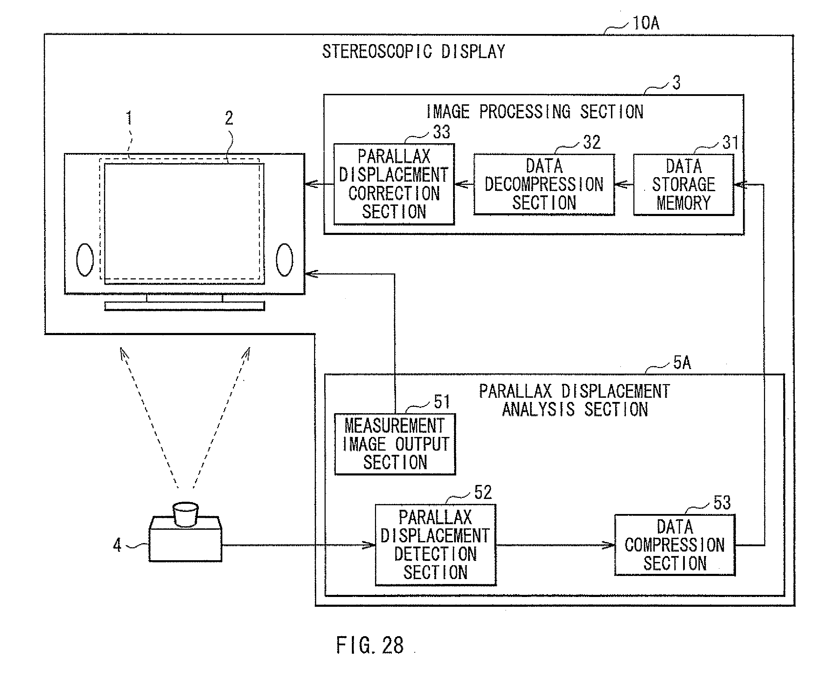

In the third embodiment, for measurement of parallax displacement during use of the stereoscopic display 10, it is considered to use a service of a display maker or the camera 4 of a user of the display. The embodiment relates to a stereoscopic display with a camera. In the embodiment, as illustrated in FIG. 28, a stereoscopic display 10A includes a parallax displacement analysis section 5A corresponding to the parallax displacement analyzer 5 in FIG. 1. As the camera 4, a camera included in the stereoscopic display 10A such as an energy-saving human detection sensor camera or a camera for automatically adjusting colors of a television according to the brightness or color shading of a room also serves as a camera for parallax displacement measurement. The stereoscopic display 10A and the camera 4 are removable, and during parallax displacement measurement, they are removed to be placed in measurement positions, and then used. The configuration of the camera 4 may be a removable connector system, a cable extending system, a wireless system by light or radio waves, or the like. In this case, even if the camera 4 for parallax displacement measurement is not specifically prepared, parallax displacement data is allowed to be updated. Alternatively, the camera 4 for measurement only may be included in the stereoscopic display 10.

### (Fifth Embodiment)

Next, a stereoscopic display system according to a fifth embodiment of the technology will be described below. It is to be noted that like components are denoted by like numerals as of the stereoscopic display system according to the first embodiment, and will not be further described.

The first embodiment relates to compensation in the case where design viewpoints for stereoscopic display of the stereoscopic display 10 are displaced during production of the stereoscopic display 10. In other words, the first embodiment relates to compensation for parallax displacement in design viewpoints of the stereoscopic display 10 in the case where a relative positional relationship between the sub-pixels of the screen of the display panel 2 and the slit sections 12 of the parallax barrier 1 is displaced due to an assembling error, variations or the like during assembling in production of the stereoscopic display 10. In the embodiment, compensation for parallax displacement not in design viewpoints of the stereoscopic display 10 but a position where a viewer sees the stereoscopic display 10 is made. In other words, the correction is made in the case where the viewer sees the stereoscopic display 10 not from design viewpoints, such as the case where the viewer sees the stereoscopic display 10 while sitting on a sofa. Parallax displacement is measured based on an image taken from positions of the eyes of the viewer sitting on a sofa, and data is analyzed to determine the magnitude of parallax displacement, and compensation for parallax displacement is made based on the magnitude.

In the embodiment, adjustment not in design viewpoints of the stereoscopic display 10 but in a position where a viewer wants to see the stereoscopic display 10 is allowed. As a result, in the case where a 3D image of the stereoscopic display 10 is viewed, the viewpoint of stereoscopic display for the positions of the eyes is optimized or at least improved according to the position of the viewer.

### (Sixth Embodiment)

Next, a stereoscopic display system according to a sixth embodiment of the technology will be described below. It is to be noted that like components are denoted by like numerals as of the stereoscopic display system according to the first embodiment, and will not be further described.

In the above-described embodiments, the parallax barrier system stereoscopic display system is described; however, even in a lenticular system stereoscopic display system, parallax images do not properly enter the eyes of the viewer to cause a deterioration in quality of stereoscopic vision; therefore, the same compensation for parallax displacement is effective. In this case, a basic configuration of a display section of the stereoscopic display and a basic principle of stereoscopic display (stereoscopic vision) are the same as those in a typical lenticular system stereoscopic display in related art (refer to FIGs. 34 and 35). In other words, for example, instead of the parallax barrier 1 in the stereoscopic display 10 in FIG. 1, a lenticular lens 101A including a plurality of cylindrical lenses (split lenses) 113 functioning as a plurality of parallax separation structures is used as a parallax separation structure. In this case, parallax displacement caused by displacement of a relative positional relationship between a plurality of pixels (sub-pixels) of the display panel 2 and focal positions of the plurality of split lenses 113 may be measured.

### (Seventh Embodiment)

Next, a stereoscopic display system according to a seventh embodiment of the technology will be described below. It is to be noted that like components are denoted by like numerals as of the stereoscopic display system according to the first embodiment, and will not be further described.

In the first embodiment, parallax displacement data obtained by measurement of the magnitude of parallax displacement of each stereoscopic display 10 is written and stored to the data storage memory 31. On the other hand, in the case where in mass production or the like, displacement of a relative positional relationship between the sub-pixels of the screen of the display panel 2 and the slit sections 12 of the parallax barrier 1 is stable in a manufacturing lot and variations from one stereoscopic display to another are small, the magnitude of parallax displacement of one stereoscopic display or an average of the magnitudes of parallax displacement of a plurality of stereoscopic displays may be used as the magnitude of parallax displacement in a stable lot, thereby avoiding measurement of the magnitude of parallax displacement from one stereoscopic display to another. Thus, the manufacturing steps are allowed to be reduced.

### (Other embodiments)

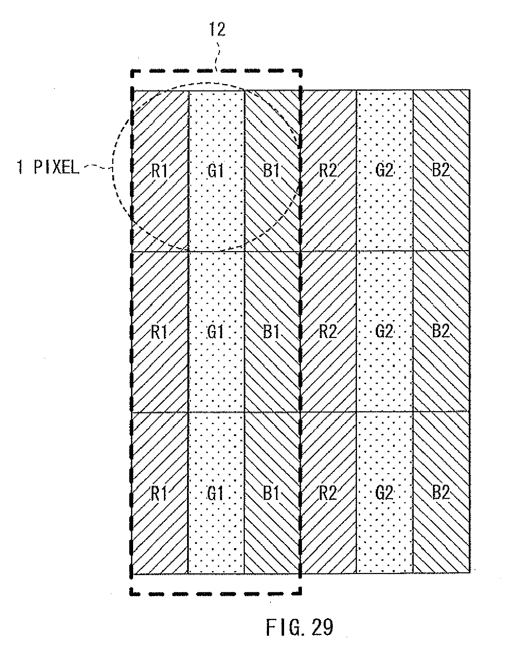

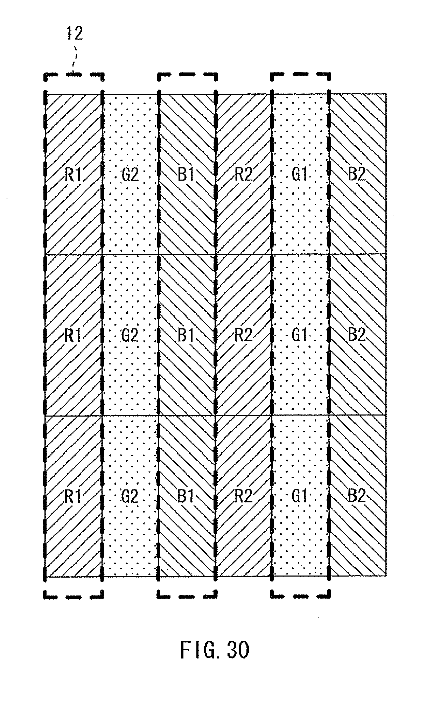

The present technology is not limited to the above-described embodiments, and may be variously modified. For example, the barrier pattern of the parallax barrier 1 is not limited to those illustrated in FIGs. 7 and 25, and any other barrier pattern may be used. FIG. 29 illustrates a first modification of the barrier pattern of the parallax barrier 1. FIG. 30 illustrates a second modification of the barrier pattern of the parallax barrier 1. In an example in FIG. 29, for example, sub-pixels R1, G1 and B1 of respective colors configuring 1 pixel in a first parallax image are configured of three successive sub-pixels in a horizontal direction. The slit width of the parallax barrier 1 corresponds to a size equal to the total size of three sub-pixels. In an example in FIG. 30, as in the case of the parallax barrier 101 in FIG. 31, the slit sections 12 are arranged to extend in a vertical direction.

The present application contains subject matter related to that disclosed in Japanese Priority Patent Application 2010-180232 filed in the Japan Patent Office on August 11, 2010 and Japanese Priority Patent Application 2010-260075 filed in the Japan Patent Office on November 22, 2010.

It should be understood by those skilled in the art that various modifications, combinations, sub-combinations and alterations may occur depending on design requirements and other factors insofar as they are within the scope of the appended claims or the equivalents thereof.
In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

### CLAUSES

Other aspects and features of the invention are set out in the following numbered clauses:
1. The stereoscopic display system according to appended claim 12, wherein
   the parallax displacement analysis section includes:
   a shooting section taking an image of the stereoscopic display from a specific viewpoint; and
   a parallax displacement detection section detecting the parallax displacement through analyzing the image taken by the shooting section.
2. The stereoscopic display system according to clause 1, wherein
   the display section includes sub-pixels of a plurality of colors, as the plurality of pixels, which are arranged periodically and two-dimensionally,
   the shooting section takes an image of the stereoscopic display from the specific viewpoint while allowing both of sub-pixels corresponding to the specific viewpoint and other sub-pixels corresponding to another viewpoint to emit light to form a specific measurement pattern image, and
   the parallax displacement detection section detects the parallax displacement through analyzing the specific measurement pattern image.
3. The method of detecting parallax displacement in a stereoscopic display according to appended claim 13, wherein
   while a specific measurement pattern image is displayed on the display section to allow both of sub-pixels corresponding to the specific viewpoint and sub-pixels corresponding to another viewpoint to emit light in a time-divisional manner, the image of the stereoscopic display is taken from the specific viewpoint,
   the parallax displacement is detected through analyzing a change in luminance of the specific measurement pattern image taken from the specific viewpoint.

## Claims

1. An image processor comprising:
a storage section storing parallax displacement data concerned with parallax displacement caused in a stereoscopic display; and
a parallax displacement correction section correcting a stereoscopic image to be displayed on the stereoscopic display based on the parallax displacement data,
wherein the stereoscopic display includes a display section including a plurality of pixels two-dimensionally arranged to display a parallax composite image created from a plurality of parallax images, and a parallax separation structure separating the parallax composite image into the plurality of parallax images.

2. The image processor according to claim 1, wherein
the parallax displacement correction section corrects the parallax composite image, based on the parallax displacement data, to compensate for the parallax displacement in each of the pixels.

3. The image processor according to claim 1, wherein
the parallax separation structure includes a plurality of parallax separation components corresponding to the pixels, respectively, and
the parallax displacement is caused by displacement of a relative positional relationship between the pixels and the parallax separation components.

4. The image process according to claim 1, wherein
the parallax separation structure ideally separates the parallax composite image into the parallax images to allow only a specific parallax image to be viewed from a specific viewpoint, and
when parallax displacement causing a different parallax image other than the specific parallax image to be viewed from the specific viewpoint occurs, the parallax displacement correction section displaces pixel addresses which are to be assigned to each of the parallax images for display, thereby to reduce the proportion of the different parallax image viewed from the specific viewpoint.

5. The image processor according to claim 4, wherein
when a magnitude of the parallax displacement corresponds to an integral multiple number of pixels, the parallax displacement correction section performs correction to displace the pixel addresses which are to be assigned to each of the different parallax image and the specific parallax image according to the magnitude of the parallax displacement, and
when a magnitude of the parallax displacement is within one pixel, the parallax displacement correction section performs correction to combine a pixel value of the different parallax image and a pixel value of the specific parallax image according to the magnitude of the parallax displacement.

6. The image processor according to claim 1, wherein
the storage section stores the parallax displacement data for some pixels sampled from the plurality of pixels, and
the image correction section determines, through an interpolation operation, parallax displacement data for pixels other than the sampled pixels, based on the parallax displacement data stored in the storage section, and then corrects the parallax composite image, based on parallax displacement data for all pixels obtained through the interpolation operation.

7. The image processor according to claim 1, wherein
the storage section stores the parallax displacement data compressed, and
the parallax displacement correction section corrects the parallax composite image based on parallax displacement data obtained by decomposing the compressed parallax displacement data.

8. The image processor according to claim 1, wherein
the display section includes sub-pixels of a plurality of colors, as the plurality of pixels, which are arranged periodically and two-dimensionally, and
the parallax displacement correction section corrects the parallax composite image to compensate for the parallax displacement in each of the sub-pixels.

9. The image processor according to claim 3, wherein
the parallax separation structure is a parallax barrier including a plurality of slit sections and a plurality of shielding sections, the slit sections each allowing light to pass therethrough to function as the parallax separation component, and the shielding sections each allowing light to be blocked, and
the parallax displacement is caused by displacement of a relative positional relationship between the pixels and the slit sections.

10. The image processor according to claim 3, wherein
the parallax separation structure is a lenticular lens array including a plurality of split lenses each functioning as the parallax separation components, and
the parallax displacement is caused by displacement of a relative positional relationship between the pixels and focal positions of the split lenses.

11. A stereoscopic display comprising:
a display section including a plurality of pixels two-dimensionally arranged to display a parallax composite image created from a plurality of parallax images;
parallax separation components each provided correspondingly to the plurality of pixels, to separate the parallax composite image into the plurality of parallax images; and
a parallax displacement correction section correcting the parallax composite image based on parallax displacement data.

12. A stereoscopic display system comprising:
a stereoscopic display;
a parallax displacement analysis section detecting parallax displacement caused in the stereoscopic display to produce parallax displacement data concerned with the parallax displacement;
a storage section storing the parallax displacement data; and
a parallax displacement correction section correcting a stereoscopic image to be displayed on the stereoscopic display, based on the parallax displacement data,
wherein the stereoscopic display includes a display section including a plurality of pixels two-dimensionally arranged to display a parallax composite image created from a plurality of parallax images, and a parallax separation structure separating the parallax composite image into the plurality of parallax images.

13. A method of detecting parallax displacement in a stereoscopic display, the stereoscopic display including a display section and a parallax separation structure, the display section including a plurality of pixels, as sub-pixels, which are two-dimensionally arranged to display a parallax composite image created from a plurality of parallax images, the parallax separation structure separating the parallax composite image into the plurality of parallax images, the method comprising:
taking an image of the stereoscopic display from a specific viewpoint while allowing both of sub-pixels corresponding to the specific viewpoint and other sub-pixels corresponding to another viewpoint to emit light to form a specific measurement pattern image; and
detecting the parallax displacement through analyzing the taken specific measurement pattern image.

14. The method of detecting parallax displacement in a stereoscopic display according to claim 13, wherein
the display section includes sub-pixels of a plurality of colors which are arranged periodically and two-dimensionally,
while a specific measurement pattern image is displayed on the display section to allow both of sub-pixels of a specific color corresponding to the specific viewpoint and sub-pixels of another color corresponding to another viewpoint to simultaneously emit light, the image of the stereoscopic display is taken from the specific viewpoint, and
the parallax displacement is detected through analyzing a color change in the specific measurement pattern image taken from the specific viewpoint.

15. A method of manufacturing a stereoscopic display, the stereoscopic display including a display section, a parallax separation structure, a storage section and a parallax displacement correction section, the display section including a plurality of pixels, as sub-pixels, which are two-dimensionally arranged to display a parallax composite image created from a plurality of parallax images, the parallax separation structure separating the parallax composite image into the plurality of parallax images, the storage section storing parallax displacement data concerned with parallax displacement, the parallax displacement correction section correcting the parallax composite image based on the parallax displacement data, the method comprising:
taking an image of the stereoscopic display from a specific viewpoint while allowing both of sub-pixels corresponding to the specific viewpoint and other sub-pixels corresponding to another viewpoint to emit light to form a specific measurement pattern image;
detecting the parallax displacement through analyzing the taken specific measurement pattern image; and
storing parallax displacement data concerned with the detected parallax displacement in the storage section.
